# EUROPÄISCHE PATENTANMELDUNG

(11) **EP 2 412 621 A2**
(43) Veröffentlichungstag der Anmeldung: **01.02.2012**
(21) Anmeldenummer: 11162012.6
(22) Anmeldetag: 12.04.2011
(51) Int. Cl.: B62M 6/70

(54) **Radfahrzeug mit Elektroantrieb im hinteren Rahmendreieck**

(30) Priorität: 13.04.2010 DE 102010003926
(71) Anmelder: Kohlbrenner, Philippe, 3413 Kaltacker (CH)
(72) Erfinder: Kohlbrenner, Philippe, 3413 Kaltacker (CH)
(74) Vertreter: Schwabe - Sandmair - Marx

(57) **Zusammenfassung**

Radfahrzeug mit Tretkurbel- und Elektroantrieb, umfassend:
a) einen der Aufhängung eines Vorderrads (A) und eines Hinterrads (B) dienenden Rahmen (1-8) mit einem Sitzrohr (1), einer oberen Hinterradstrebe (5) und einer unteren Hinterradstrebe (6), die zur Aufhängung des Hinterrads (B) miteinander zumindest im Wesentlichen ein Rahmendreieck (1, 5, 6) bilden,
b) eine Tretkurbel (10) zur Umwandlung von Muskelkraft in Drehmoment,
c) eine Tretkurbelkopplung (11-13) zur Übertragung des Drehmoments der Tretkurbel (10) auf das Hinterrad (B),
d) einen Elektromotor (20), vorzugsweise Außenläufermotor, mit einem Stator (25) und einem Rotor (30),
e) und eine Motorkopplung (21-23) zur Übertragung eines Drehmoments des Elektromotors (20) auf das Hinterrad (B),
f) wobei die Tretkurbel (10) und der Elektromotor (20) auf die gleiche Seite des Hinterrads (B) abtreiben,
g) der Elektromotor (20) am Rahmendreieck (1,5,6) abgestützt
h) und in einer Seitenansicht auf das Radfahrzeug gesehen innerhalb des Rahmendreiecks (1, 5, 6) angeordnet ist.

## Beschreibung

Die Erfindung betrifft ein Radfahrzeug mit Tretkurbel- und Elektroantrieb, insbesondere ein Zweirad mit solch einem Hybridantrieb. Die Erfindung betrifft auch einen besonders kompakten Elektromotor und einen diesen umfassenden Elektroantrieb, der wenig Raum beansprucht und daher für den Antrieb eines Radfahrzeugs, beispielsweise mit Tretkurbel- und Elektroantrieb oder auch nur dem Elektroantrieb, besonders geeignet ist. In mit Muskelkraft betreibbaren Zwei- und Dreirädern und auch in mopedartigen Radfahrzeugen sowie Rollstühlen, Kinderwagen und dergleichen kann der Elektroantrieb bevorzugt Verwendung finden.

Hybridantriebe für Fahrräder sind in unterschiedlichen Bauformen bekannt, unter anderem die Anordnung eines Elektromotors unmittelbar auf der Drehachse des Hinterrads, des Vorderrads oder der Tretkurbelwelle. Derart integrierte Anordnungen erfordern speziell angepasste, daher aufwändige und teure Motorkonstruktionen, die überdies integrationsbedingten Beschränkungen unterliegen. Am Markt haben sich daher Konzepte durchgesetzt, in denen der Elektromotor in der Nähe des Tretkurbelgehäuses unmittelbar an oder separat von diesem am Fahrradrahmen abgestützt ist und entweder separat von der Tretkurbel über eine eigene oder über eine mit der Tretkurbel gemeinsame Kopplung das Hinterrad antreibt. Beispielhaft wird auf die US 4,541,500 B und die US 5,242,335 B verwiesen. Eine derartige Anordnung ermöglicht zwar die Verwendung konventioneller Motoren und auch eine flexible Anpassung der nach Drehzahl und Drehmoment unterschiedlichen Leistungscharakteristiken von Tretkurbel- und Elektroantrieb, andererseits steht aber auch um das Tretlagergehäuse Bauraum nur begrenzt zur Verfügung und die Montage, Wartung und Reparatur gestalten sich schwierig. Die Anordnung des Motors zwischen dem Tretlagergehäuse und dem Hinterrad, wie beispielsweise in der US 4,541,500 B offenbart, erfordert im Durchmesser schlanke Elektromotoren mit kleinem Nenndrehmoment und entsprechend großer Nenndrehzahl. Die Drehzahl des Motors wird über ein mehrstufiges Untersetzungsgetriebe auf das Hinterradritzel untersetzt. Sollen größere Motoren mit entsprechend größerem Drehmoment verwendet werden, muss der Abstand der Radachsen vergrößert werden, um zwischen dem Tretlagergehäuse und dem Hinterrad ausreichend Platz zu schaffen. Die bekannten Hybridkonzepte erfordern im Ergebnis allesamt tiefgreifende Änderungen der herkömmlichen Fahrradgeometrie bis hin zu einer kompletten Neukonstruktion.

Es ist eine Aufgabe der Erfindung, den elektromotorischen Antriebsteil eines Radfahrzeugs mit Tretkurbel- und Elektroantrieb zu vereinfachen, insbesondere die Integration des Elektroantriebs, die Flexibilität hinsichtlich der Anpassung des Elektroantrieb an Gegebenheiten des Tretkurbelantriebs aber zu erhalten.

Nach einem weiteren Aspekt soll ein Elektromotor geschaffen werden, der kompakt, aber dennoch leistungsstark ist und sich daher insbesondere für den Antrieb eines Fahrzeugs, wie etwa eines Radfahrzeugs mit Tretkurbel- und Elektroantrieb oder eines nur vom Elektromotor angetriebenen Fahrzeugs, eignet.

Die Erfindung geht von einem Radfahrzeug mit Tretkurbel- und Elektroantrieb aus, das einen Rahmen für die Aufhängung eines Vorderrads und eines Hinterrads, eine Tretkurbel zur Umwandlung von Muskelkraft in Drehmoment, einen Elektromotor sowie eine Tretkurbelkopplung und eine Motorkopplung zur Übertragung des jeweiligen Drehmoments auf das Hinterrad umfasst. Der Rahmen umfasst vorzugsweise ein Sitzrohr, das bei Ausführung des Radfahrzeugs als Zweirad auch als Sattelrohr bezeichnet werden kann. Der Rahmen kann ferner eine obere Hinterradstrebe und eine untere Hinterradstrebe zur Aufhängung des Hinterrads aufweisen. Das Sitzrohr und die beiden Hinterradstreben können in einer Seitenansicht auf das Radfahrzeug zumindest im Wesentlichen ein Rahmendreieck bilden, vorzugsweise auf der Seite der Tretkurbelkopplung. Ein ebensolches Rahmendreieck kann auf der anderen Seite des Radfahrzeugs mit dem gleichen Sitzrohr, aber einer weiteren oberen Hinterradstrebe und einer weiteren unteren Hinterradstrebe gebildet sein, um das Hinterrad beidseitig am Rahmen aufzuhängen bzw. abzustützen. Eine nur einseitige Aufhängung soll jedoch nicht ausgeschlossen werden. Die obere und die untere Hinterradstrebe können sich jeweils bis zum Sattelrohr erstrecken und mit diesem fest, vorzugsweise stoffschlüssig mittels beispielsweise jeweils einer Schweißverbindung verbunden sein. Die beiden Streben oder auch nur eine dieser beiden Streben kann mit dem Sattelrohr jedoch auch beweglich verbunden sein, etwa gegen die Kraft einer Feder oder eines Dämpfers. In Bezug auf das Gewicht und den Preis wird jedoch eine einfach feste Verbindung bevorzugt. Die obere Hinterradstrebe erstreckt sich vom Sattelrohr aus gesehen nach hinten unten zumindest im Wesentlichen in Richtung auf eine Drehachse des Hinterrads. Die untere Hinterradstrebe erstreckt sich vom Sattelrohr aus gesehen nach hinten in Richtung auf die Drehachse des Hinterrads; sie kann sich zumindest im Wesentlichen horizontal erstrecken. Insoweit können das Sitzrohr und die beiden Hinterradstreben insbesondere ein hinteres Rahmendreieck bilden, wie es bei Radfahrzeugen weit verbreitet ist.

In vorteilhaften Ausführungen ist der Elektromotor am Rahmendreiecks abgestützt und in der Seitenansicht auf das Radfahrzeug gesehen innerhalb des Rahmendreiecks angeordnet. Die Anordnung im Rahmendreieck erlaubt eine steife Abstützung des Elektromotors sowohl an der oberen als auch an der unteren Hinterradstrebe. Die Montage des Elektromotors, auch eine nachträgliche Montage beispielsweise durch den Benutzer oder Händler ist einfach, nicht zuletzt wegen der praktisch freien Zugänglichkeit des Orts der Anordnung. Von Vorteil ist auch, dass auf bewährte, herkömmliche Fahrradgeometrien zurückgegriffen, beispielsweise ein herkömmlicher Rahmen verwendet werden kann, die erfindungsgemäße Anordnung des Elektromotors also keine spezielle Rahmenkonstruktion erfordert. Ein erfindungsgemäßes Fahrrad kann mit Ausnahme des zusätzlich zum Tretkurbelantrieb vorgesehen Elektroantriebs mechanisch herkömmlich konstruiert sein, so muss insbesondere kein Radabstand vergrößert werden, um den Elektroantrieb zu integrieren. Hinsichtlich der Anpassung der Leistungscharakteristik des Motors an den Tretkurbelantrieb besteht die gleiche Flexibilität wie bei Anordnung des Elektromotors im näheren Bereich um das Tretlagergehäuse. Andererseits ist die Anordnung näher bei der Drehachse des Hinterrads insbesondere von Vorteil, wenn der Elektromotor über die Motorkopplung direkt auf das Hinterrad abtreibt und nicht erst über die Tretkurbelkopplung mit dem Hinterrad gekoppelt ist.

Um den Elektromotor möglichst steif abzustützen und Vibrationen im Elektroantrieb gering zu halten, ist eine Anordnung des Elektromotors nahe der Drehachse des Hinterrads erstrebenswert. Es ist daher von Vorteil, wenn die Drehachse des Elektromotors von der Drehachse des Hinterrads einen geringeren Abstand aufweist als zu einem nächsten Punkt des Sitzrohrs, der Elektromotor also im hinteren Bereich, vorzugsweise gänzlich in der hinteren Hälfte des Rahmendreiecks angeordnet ist.

Der Elektromotor ist von der Drehachse der Tretkurbel vorzugsweise so weit entfernt angeordnet, dass er sich außerhalb des Umfangskreises der Tretkurbel befindet. Der Motor kann in solch von der Tretkurbel abgerückter Anordnung zumindest grundsätzlich in axialer Richtung, parallel zu den Drehachsen der Räder, bis auf die Höhe der Innenseite der Tretkurbel und sogar darüber hinaus nach außen vorstehen. Anderenfalls müsste der Elektromotor axial so flach sein, dass er von der Tretkurbel beim Treten überstrichen werden kann. Bevorzugt befindet sich der Elektromotor jedoch gänzlich außerhalb des Umfangskreises der Tretkurbel, indem seine Drehachse entsprechend weit im hinteren Bereich des Rahmendreiecks zu liegen kommt und sich ein Gehäuse des Elektromotors mit seinem äußeren Umfang noch außerhalb des Tretkurbelkreises befindet.

Der Elektromotor ist axial vorzugsweise so flach und dem Hinterrad axial vorzugsweise so nah angeordnet, dass er hinter einer Pedale der Tretkurbel axial zurücksteht und beim Treten nicht mit der über die Tretkurbel möglicherweise nach hinten vorstehenden Ferse des Fahrers in Berührung kommt. Eine derartige Bauweise und Anordnung des Motors wird vorteilhafterweise mit der Anordnung radial außerhalb des Tretkurbelkreises kombiniert.

In bevorzugten Ausführungen ist der Elektromotor nicht nur in der Seitenansicht innerhalb des Rahmendreiecks angeordnet, sondern überlappt auch axial mit der oberen oder der unteren Hinterradstrebe, ragt also axial in das Rahmendreieck in Richtung auf das Hinterrad hinein.

Die Tretkurbelkopplung kann beispielsweise eine Kardanwelle, vorzugsweise eine flexible Kardanwelle, umfassen oder insbesondere einen Zugmitteltrieb. Das Zugmittel kann ein Riemen, vorzugsweise ein Zahnriemen wie etwa ein carbonfaserverstärkter Kunststoffriemen, oder eine Kette sein. Das Gleiche gilt sinngemäß für die Motorkopplung. Der Elektromotor kann über die Tretkurbelkopplung, beispielsweise durch Eingriff in ein Zugmittel der Tretkurbelkopplung, auf das Hinterrad abtreiben. Bevorzugter verläuft die Motorkopplung allerdings bis zum Hinterrad separat von der Tretkurbelkopplung. Umfasst die Motorkopplung einen Zugmitteltrieb, was auch den Fall einschließt, dass die Motorkopplung aus dem Zugmitteltrieb besteht, so kommt vorzugsweise ein Zahnriemen zum Einsatz. Ein Vorteil des Zahnriemens ist dessen spielfreier Lauf. Bei dem Zahnriemen kann es sich insbesondere um einen Kunststoffzahnriemen, vorzugsweise um einen faserverstärkten Kunststoffzahnriemen handeln. Carbonfaserverstärkte Kunststoffriemen weisen den Vorteil einer geringen, praktisch vernachlässigbaren Elastizität auf. Sie laufen verschleiß- und geräuscharm. Die Anordnung nahe bei der Hinterradachse ist auch deshalb von Vorteil, weil bei Ausbildung der Motorkopplung als Zugmitteltrieb das Zugmittel in geringer Länge ausgeführt werden kann.

Der Elektromotor und die Tretkurbelkopplung können auf einander gegenüberliegenden Seiten des Radfahrzeugs angeordnet sein, die Tretkurbelkopplung beispielsweise wie üblich rechts und der Elektromotor links vom Hinterrad. Entsprechend würden die Tretkurbel und der Elektromotor auf unterschiedlichen Seiten auf das Hinterrad abtreiben.

In bevorzugten Ausführungen treiben die Tretkurbel und der Elektromotor jedoch auf die gleiche Seite des Hinterrads ab. In derartigen Ausführungen ist der Elektromotor auf der gleichen Seite wie die Tretkurbelkopplung angeordnet. Sind die Tretkurbelkopplung und auch die Motorkopplung jeweils ein Zugmitteltrieb oder umfassen sie jeweils einen Zugmitteltrieb, so weist vorzugsweise jede der Kopplungen ein um die Drehachse des Hinterrads drehbares eigenes Hinterradritzel, die Tretkurbelkopplung ein Tretkurbel-Hinterradritzel und die Motorkopplung ein Motor-Hinterradritzel. Verläuft die Motorkopplung von der Tretkurbelkopplung separat bis zum Hinterrad, können ein in der Tretkurbelkopplung angeordnetes, um die Drehachse des Hinterrads drehbares Tretkurbel-Hinterradritzel und ein in der Motorkopplung angeordnetes, um die Drehachse des Hinterrads drehbares Motor-Hinterradritzel axial unmittelbar nebeneinander angeordnet sein. Das Tretkurbel-Hinterradritzel und das Motor-Hinterradritzel können durch einen auf der Drehachse des Hinterrads angeordneten Freilauf oder jeweils durch solch einen Freilauf voneinander antriebsmäßig getrennt sein, um zu verhindern, dass die Tretkurbel den Elektromotor oder der Elektromotor die Tretkurbel antreibt. Bevorzugter sind das Motor-Hinterradritzel und das Tretkurbel-Hinterradritzel jedoch in einem Stück gemeinsam geformt oder in Bezug auf beide Drehrichtungen drehsteif miteinander verbunden, vorzugsweise zu einem nur diese beiden Ritzel umfassenden Doppelritzel, und bilden somit eine Dreheinheit. Wenigstens ein Freilauf, vorzugsweise ein Motorfreilauf und auch ein Tretkurbelfreilauf, wird vorzugsweise dennoch vorgesehen, allerdings an einem anderen Ort, vorzugsweise im Drehmomentstrang näher bei dem Motor oder der Tretkurbel.

Bevorzugten Ausführungen entspricht es, wenn das Drehmoment des Elektromotors über einen von der Drehachse des Hinterrads abgerückten Motorfreilauf oder das Drehmoment der Tretkurbel über einen von der Drehachse des Hinterrads abgerückten Tretkurbelfreilauf auf die Drehachse des Hinterrads übertragbar ist oder sind.

Verlaufen die Tretkurbelkopplung und die Motorkopplung nebeneinander auf der gleichen Seite des Hinterrads, wird es bevorzugt, wenn die Motorkopplung dem Hinterrad axial näher ist als die Tretkurbelkopplung. Bei Ausbildung beider Kopplungen mittels jeweils einem Zugmittel, ist das Motor-Hinterradritzel in derartigen Anordnungen das axial innere und das Tretkurbel-Hinterradritzel das äußere dieser beiden Ritzel. Eine Motorwelle des Elektromotors kann die Tretkurbelkopplung in derartigen Ausführungen axial überlappen.

Um den Elektromotor nahe bei der Drehachse des Hinterrads anordnen zu können, kann der Elektromotor in der Seitenansicht auf das Radfahrzeug gesehen mit der Tretkurbelkopplung überlappen. Vorzugsweise überlappt ein Rotor oder ein Stator des Elektromotors mit der Tretkurbelkopplung. Das Wort "oder" wird hier wie auch sonst von der Erfindung stets als "inklusiv oder" verstanden, umfasst also die Bedeutung sowohl von "entweder ... oder" als auch von "und", soweit sich aus dem jeweils konkreten Zusammenhang nicht ausschließlich nur eine dieser beiden Bedeutungen ergeben kann. Bezogen auf die überlappende Anordnung bedeutet dies, dass in ersten Varianten nur der Stator, in zweiten Varianten nur der Rotor und in dritten Varianten sowohl der Rotor als auch der Stator mit der Tretkurbelkopplung überlappt. Im Falle einer Kopplung mittels Zugmittel überlappt oder überlappen der Stator oder Rotor vorzugsweise nur ein Obertrum des Zugmittels der Trekturbelkopplung. Zweckmäßigerweise liegt oder liegen der Stator oder Rotor axial außen von der Tretkurbelkopplung und ein Motorritzel axial innen von der Tretkurbelkopplung, näher als diese beim Hinterrad.

Zu seiner steifen Abstützung kann der Elektromotor mittels einer zu der oberen Hinterradstrebe und der unteren Hinterradstrebe erstreckten Stützeinrichtung an beiden Hinterradstreben zugleich abgestützt sein. Die Stützeinrichtung umfasst eine obere Stütze und eine untere Stütze. Der Elektromotor ist mittels der oberen Stütze an der oberen Hinterradstrebe und mittels der unteren Stütze an der unteren Hinterradstrebe abgestützt Der Elektromotor ist vom Hinterrad aus gesehen vorzugsweise außen an der Stützeinrichtung befestigt. Die Verbindung ist vorzugsweise lösbar, beispielsweise eine lösbare Schraubverbindung. Ist die Stützeinrichtung in einem Stück geformt, weist sie vorzugsweise einen Durchgang auf, durch den eine Motorausgangswelle sich in Richtung auf das Hinterrad erstreckt, so dass ein Motorritzel, von dem aus der Elektromotor auf das Hinterrad abtreiben kann, zwischen der Stützeinrichtung und dem Hinterrad angeordnet werden kann. Die Stützeinrichtung kann vorzugsweise aber auch mehrteilig sein, bevorzugt zweiteilig. In der mehrteiligen Variante ist die untere Stütze von der oberen Stütze separat ausgeführt. Die obere Stütze dient der Abstützung des Elektromotors an der oberen Hinterradstrebe, und die untere Stütze dient der Abstützung des Motors an der unteren Hinterradstrebe. Die einteilige Stützeinrichtung kann insbesondere eine an die räumlichen Gegebenheiten des Rahmendreiecks angepasst geformte Blechstruktur sein. Das Gleiche gilt für die bevorzugt mehrteilige Stützeinrichtung, also für deren separaten Stützen jeweils. Anstelle einer oder mehrerer Blechstrukturen kommt auch eine Stützeinrichtung oder kommen Stützen einer mehrteiligen Stützeinrichtung aus Kunststoff, vorzugsweise einem verstärkten Kunststoff in Betracht. Eine mehrteilige, vorzugsweise genau zweiteilige Stützeinrichtung hat den Vorteil, dass die einzelnen Stützen einfacher als eine einteilige Stützeinrichtung geformt werden können, zumal die vom Rahmendreieck aufgespannte Fläche in den meisten Fällen nicht senkrecht zur Drehachse des Hinterrads steht. Der Elektromotor wird vorzugsweise mittels der Stützeinrichtung zu dieser Drehachse ausgerichtet. Zwischen den separaten Stützen der mehrteiligen Stützeinrichtung verbleibt in bevorzugten Ausführungen ein lichter Abstand und somit ein Freiraum, in dessen Bereich in der Seitenansicht auf das Radfahrzeug gesehen ein Zugmittel einer bevorzugten Tretkurbelkopplung verlaufen kann, so dass die geteilte Stützeinrichtung in axialer Richtung bei überlappender Anordnung des Elektromotors zumindest um die Wandstärke der Stützeinrichtung schlanker sein kann als eine einteilige Stützeinrichtung. Durch die Mehrteiligkeit kann schließlich auch noch Gewicht eingespart werden.

Eine mehrteilige Stützeinrichtung kann insbesondere eine mit der oberen Hinterradstrebe verbundene obere Stütze und eine mit der unteren Hinterradstrebe verbundene untere Stütze umfassen, wobei in einer Seitenansicht auf das Hinterrad gesehen die obere Stütze von der oberen Hinterradstrebe in Richtung auf die untere Hinterradstrebe und die untere Stütze von der unteren Hinterradstrebe in Richtung auf die obere Hinterradstrebe ragt. In der Seitenansicht gesehen verbleibt zwischen den Stützen vorzugsweise ein lichter Abstand, der vorstehend genannte Freiraum für beispielsweise eine Kette oder einen Riemen. Der Motor kann als Teil der Stützeinrichtung angesehen werden, wenn ein als Montagestruktur des Motors dienendes, in Bezug auf den Rahmen ortsfestes Gehäuseteil des Motors mit der oberen und mit der unteren Stütze jeweils verbunden ist. Vorzugsweise bildet ein Gehäusedeckel diese Montagestruktur. Der Motor überbrückt in der Seitenansicht gesehen den Freiraum zwischen den Stützen. Wenn vorstehend von einer zweiteiligen Stützeinrichtung die Rede ist, wird die verbindende Montagestruktur des Motors wie beispielsweise ein Gehäusedeckel nicht mitgezählt. Die Montagestruktur ist an der Stützeinrichtung vorzugsweise lösbar montiert oder montierbar.

In bevorzugten Ausführungen ist oder sind die obere Stütze längs der oberen Hinterradstrebe linien- oder streifenförmig erstreckt oder an voneinander beabstandeten Stützstellen oder die untere Stütze längs der unteren Hinterradstrebe linien- oder streifenförmig erstreckt oder an voneinander beabstandeten Stützstellen abgestützt. Der Elektromotor ist im Sinne einer steifen Abstützung vorzugsweise so angeordnet, dass sich die obere Stütze von der oberen Hinterradstrebe und die untere Stütze von der unteren Hinterradstrebe jeweils in Richtung auf die Drehachse des Rotors des Elektromotors erstrecken. In der zur Hinterradachse parallelen Seitenansicht gesehen schneidet somit eine zur Drehachse des Rotors radiale gerade Linie die obere Hinterradstrebe zwischen den Endpunkten der Abstützung der oberen Stütze, und eine zur Drehachse des Rotors radiale gerade Linie schneidet die untere Hinterradstrebe zwischen den Endpunkten der Abstützung der unteren Stütze. Wie bereits erwähnt können die obere und die untere Stütze in einem Stück geformt oder fest unmittelbar miteinander verbunden sein. Bevorzugter sind sie jedoch separat gefertigt und weisen besagten Freiraum zwischen sich auf.

Ist der Elektromotor mittels einer oberen Strebe an wenigstens einer Stützstelle der oberen Hinterradstrebe und mittels einer unteren Strebe an wenigstens einer Stützstelle der unteren Hinterradstrebe abgestützt, kann die obere Stütze für eine steife Abstützung vorteilhaft so angeordnet sein, dass die Drehachse des Rotors in der zur Drehachse parallelen Seitenansicht in einem Dreieck liegt, dessen Eckpunkte die Drehachse des Hinterrads, die wenigstens eine Stützstelle der oberen Hinterradstrebe und die wenigstens eine Stützstelle der unteren Hinterradstrebe sind. Eine Anordnung derart, dass die Drehachse des Rotors auf einer geraden Verbindungslinie liegt, die die Stützstellen miteinander verbindet, ist eingeschlossen. In Ausführungen, in denen die Abstützung an der oberen Hinterradstrebe oder die Abstützung an der unteren Hinterradstrebe in der Seitenansicht gesehen linienförmig ist, ersetzt ein Endpunkt an dem von der Hinterradachse abgewandten Ende der jeweiligen Abstützung die wenigstens eine Stützstelle der jeweiligen Hinterradstrebe, also die beiden von der Hinterradachse entfernten Eckpunkte des Dreiecks. Ist der Motor mittels der oberen Stütze an mehreren Stützstellen der oberen Hinterradstrebe oder an mehreren Stützstellen der unteren Hinterradstrebe abgestützt, ist der Motor vorzugsweise so angeordnet, dass die Drehachse des Motors in einem Flächenbereich liegt, einschließlich des Rands des Flächenbereichs, den eine erste und eine zweite gerade Verbindungslinie begrenzen. Die erste Verbindungslinie verbindet eine erste Stützstelle der oberen Hinterradstrebe mit einer ersten Stützstelle der unteren Hinterradstrebe. Die zweite Verbindungslinie verbindet eine zweite Stützstelle der oberen Hinterradstrebe mit einer zweiten Stützstelle der unteren Hinterradstrebe, allerdings weist die zweite Stützstelle der oberen Hinterradstrebe von der ersten Stützstelle der oberen Hinterradstrebe oder die zweite Stützstelle der unteren Hinterradstrebe von der ersten Stützstelle der unteren Hinterradstrebe einen Abstand auf. Der Flächenbereich kann im Extremfall eine Dreieckfläche sein, falls an einer der Hinterradstreben nur eine einzige Stützstelle vorhanden ist, vorzugsweise erstrecken sich die erste und die zweite Verbindungslinie zwischen den Hinterradstreben jedoch überall mit einem Abstand voneinander. In Ausführungen, in denen die Abstützung an der oberen Hinterradstrebe oder die Abstützung an der unteren Hinterradstrebe in der Seitenansicht gesehen linienförmig ist, ersetzen Endpunkte der jeweiligen Abstützung die erste und zweite Stützstelle der jeweiligen Hinterradstrebe.

In bevorzugten Ausführungen ist das Hinterrad von der Tretkurbel über ein variables Getriebe, zweckmäßigerweise ein Schaltgetriebe antreibbar. So können etwa mehrere Trettkurbel-Hinterradritzel nebeneinander auf der Drehachse des Hinterrads angeordnet sein und mittels eines Zugmittelhebers geschaltet werden. Bevorzugter ist das variable Getriebe in einer Nabe des Hinterrads angeordnet. Das variable Getriebe kann insbesondere ein Planetengetriebe sein. Der Tretkurbelantrieb treibt auf eine Getriebeeingangswelle des variablen Getriebes ab.

In einer Weiterbildung ist auch der Elektromotor mit dem Hinterrad über ein variables Getriebe gekoppelt, zweckmäßigerweise über ein Schaltgetriebe, so dass mit diesem variablen Getriebe das Drehzahlverhältnis des Hinterrads relativ zum Motor variiert werden kann. Vorzugsweise treibt der Elektromotor das Hinterrad über das gleiche variable Getriebe wie die Tretkurbel an. Noch bevorzugter treibt der Elektromotor über die Motorkopplung auf die gleiche Getriebeeingangswelle wie der Tretkurbelantrieb ab. Im Falle einer wie bevorzugt von der Tretkurbelkopplung separaten Motorkopplung übertragen beide Antriebe zwar bis zum Hinterrad ihr Drehmoment separat voneinander, die beiden Drehmomente werden jedoch in das gleiche Getriebeeingangsglied eingeleitet. Dieses gemeinsame Getriebeeingangsglied bzw. die gemeinsame Getriebeeingangswelle ist in derartigen Ausführungen zumindest in Antriebsdrehrichtung fest mit dem Motor-Hinterradritzel und dem Tretkurbel-Hinterradritzel verbunden, so dass über diese beiden Hinterradritzel unmittelbar das gemeinsame Getriebeeingangsglied angetrieben und von diesem über weitere Getriebeglieder des variablen Getriebes auf die Hinterradnabe abgetrieben wird. Dies vereinfacht bei Ausbildung des variablen Getriebes als manuell betätigbares Schaltgetriebe auch die Handhabung des Hybridantriebs für den Fahrer und verringert den konstruktiv zu betreibenden Aufwand gegenüber einem Antriebskonzept mit nur einer einzigen der beiden Antriebsarten.

Sind die auf der Drehachse des Hinterrads angeordneten Hinterradritzel der Antriebe einfach drehsteif mit dem gleichen Getriebeeingangsglied des variablen Getriebes verbunden, ein optionaler Freilauf des Elektroantriebs oder des Tretkurbelantriebs also von der Drehachse des Hinterrads abgerückt, vorzugsweise im Bereich der Tretkurbel oder des Elektromotors angeordnet, ist beim Hinterrad und im Bereich der Hinterradaufhängung kein oder allenfalls nur ein sehr geringer Anpassungsaufwand zu betreiben. Ein Doppelzahnrad, gebildet aus Tretkurbel-Hinterradritzel und Motor-Hinterradritzel, kann axial schlank bauen und praktisch wie ein einziges Ritzel auf der Drehachse angeordnet werden. Die Anordnung eines Motorfreilauf abgerückt von der Drehachse des Hinterrads ist auch vorteilhaft für den Freilauf als solchen. So kann ein Motorfreilauf vorteilhafterweise unmittelbar beim Elektromotor angeordnet sein, vorteilhafterweise auf der Drehachse der Motorwelle, oder aber, sollte diese nicht mit der Drehachse des Rotors des Elektromotors zusammenfallen, auf der Drehachse des Rotors. Da die Drehzahl des Elektromotors vorzugsweise auf das Hinterrad untersetzt wird, kann die Drehmomentbelastung für den Motorfreilauf im Vergleich mit der Anordnung des Freilaufs auf der Drehachse des Hinterrads entsprechend dem Untersetzungsverhältnis verringert und der Motorfreilauf entsprechend schwächer dimensioniert werden. Dies spart Kosten und auch Bauraum für den Freilauf.

Der Elektromotor kann das Hinterrad über eine Kardanwelle, vorzugsweise flexible Kardanwelle, alternativ und bevorzugter über ein Stirnradpaar oder noch bevorzugter mittels eines Zugmittelgetriebes antreiben. Besonders bevorzugt wird wie bereits erwähnt ein Zahnriementrieb. Über die genannten Vorteile hinaus erlaubt ein Zahnriementrieb auch eine große Untersetzung der Motordrehzahl, nicht zuletzt wegen der mittels eines Zahnriemens realisierbaren feinen Zahnteilung. So entspricht es bevorzugten Ausführungen, wenn der Zahnriemen hinsichtlich seiner Verzahnung mit einem Modul von höchstens zwei, bevorzugter höchstens 1,5 ausgestattet ist. Dies trägt dazu bei, dass ein Motorritzel stets mit einer ausreichenden Zahl von Zähnen mit dem Zahnriemen in Eingriff ist und somit der Durchmesser des Motorritzels vorteilhaft verringert werden kann, um die Untersetzung zu erhöhen.

In bevorzugten Ausführungen ist ein Motorfreilauf zwischen dem Rotor des Elektromotors und der Motorwelle angeordnet. Der Motorfreilauf kann insbesondere in einem Ringspalt zwischen dem Rotor und einer sich in oder durch den Rotor erstreckenden Motorwelle angeordnet und insbesondere als Hülsenfreilauf gebildet sein. In Bezug auf vorteilhafte Anordnungen des Motorfreilaufs werden die WO 2009/127263 A1 und die PCT/EP2009/055308 in Bezug genommen. Vorzugsweise ist in der Tretkurbelkopplung ein Freilauf angeordnet. Der Tretkurbelfreilauf kann insbesondere zwischen der Tretkurbelwelle und dem Tretkurbelritzel angeordnet sein. Im Falle der Anordnung sowohl eines Motorfreilaufs als auch eines Tretkurbelfreilaufs kann das Radfahrzeug wahlweise entweder nur mittels der Tretkurbel oder nur mittels des Elektromotors oder mit Überlagerung beider Antriebe angetrieben werden. Der Motor treibt dabei nicht die Tretkurbel und diese auch nicht den Elektromotor an. Bevorzugte Möglichkeiten für das Antriebsmanagement werden ebenfalls in den beiden genannten PCT-Anmeldungen im Zusammenhang mit der Messung des von der Tretkurbelwelle übertragenen Drehmoments offenbart, so dass die beiden PCT-Anmeldungen auch jeweils in Bezug auf das Antriebsmanagement und die Messung des von der Tretkurbelwelle übertragenen Drehmoments in Bezug genommen werden.

In bevorzugten Ausführungen ist der Elektromotor so gestaltet, dass der Rotor einen Rotortopf umfasst, der den Stator an einer Stirnseite und am äußeren Umfang umlaufend umgibt, und der Rotortopf ein äußeres Gehäuse des Elektromotors bildet, also unmittelbar mit der Umgebung im Kontakt ist. Eine Folge dieser Ausgestaltung ist, dass das äußere Gehäuse des Elektromotors im Betrieb des Elektromotors dreht. Der Elektromotor ist in bevorzugten Ausführungen ein Außenläufer, entsprechend umgibt ein elektromagnetisch wirksamer Teil des Rotors unter Ausbildung eines engen Spalts den Stator am äußeren Umfang. Der elektromagnetische Teil des Rotors ist an der Innenseite der Umfangswand des Rotortopfs angeordnet oder bildet die Umfangswand. Bevorzugt setzt sich der elektromagnetisch wirksame Teil des Rotors aus Permanentmagneten zusammen, die in alternierender Polfolge in Umfangsrichtung an der Topfumfangswand angeordnet sind. Die WO 2009/127263 A1 wird auch in Bezug auf für den Außenläufermotor bevorzugte Merkmale in Bezug genommen, soweit es sich nicht um das äußere Gehäuse des Elektromotors handelt.

Der Stator kann vorteilhafterweise einen Deckel für den Rotortopf bilden, wobei dieser Deckel relativ zum Rahmen des Radfahrzeugs stillsteht. Der Stator umfasst vorteilhafterweise den mit elektrischer Energie zu versorgenden elektromagnetischen Teil des Elektromotors, also dessen Spule(n). Der Rotortopf umgibt den Stator vorzugsweise an dessen axialen Außenseite, der vom Hinterrad abgewandten Seite. Der vom Stator gebildete Deckel, im folgenden Statordeckel genannt, ist vorzugsweise ebenfalls eine Gehäuseaußenwand, nämlich ein Gehäusedeckel. Der Statordeckel kann insbesondere eine dem Hinterrad zugewandte axial innere Gehäuseaußenwand bilden. Der Statordeckel ist vorteilhafterweise axial flach, er kann insbesondere scheibenförmig sein. Bildet der Statordeckel eine Montagestruktur des Elektromotors, so dass der Elektromotor unmittelbar mit dem Statordeckel an der Stützeinrichtung befestigt oder befestigbar ist, kann die axiale Dicke des Motors reduziert werden.

Der Statordeckel schließt den Rotortopf vorzugsweise ausreichend dicht ab, um das Eindringen von Schmutz oder Wasser in das so gebildete Motorgehäuse zu verhindern. Rotortopf und Statordeckel bilden vorzugsweise unmittelbar miteinander eine Wellendichtung, die vorzugsweise als berührungsfreie Wellendichtung ausgeführt ist, beispielsweise in der Art einer Labyrinthdichtung. Um eine um die Drehachse des Rotors umlaufende Wellendichtung zu erhalten, können der Statordeckel einen Statordichtsteg und der Rotortopf an seiner Umfangswand einen Rotordichtsteg aufweisen, die einander radial oder vorzugsweise axial überlappen. Um die Dichtigkeit zu erhöhen, ist von Vorteil, wenn der Statordichtsteg oder der Rotordichtsteg umlaufend wenigstens eine Dichtnut und der jeweils andere Dichtsteg einen in die Dichtnut eintauchenden Dichtring bilden. Die Wellendichtung kann auch in noch mehr Stufen ausgeführt sein, beispielsweise derart, dass beide Dichtstege jeweils eine Dichtnut und jeweils einen Dichtring bilden, der in die Dichtnut des jeweiligen anderen Teils eintaucht. Der Rotordichtsteg und der Statordichtsteg können einander radial überlappen, der Rotordichtsteg oder der Statordichtsteg beispielsweise als die besagte Dichtnut ausgeführt sein, die sich nach radial einwärts öffnet, so dass der jeweilige andere Dichtsteg radial in die Dichtnut eintaucht. Um jedoch den Durchmesser des Elektromotors vorteilhaft klein halten zu können, wird es bevorzugt, wenn der Statordichtsteg und der Rotordichtsteg einander in die axiale Richtung überlappen. Auf diese Weise kann der Rotortopf sehr einfach und in radialer Richtung platzsparend mit seinem dem Hinterrad zugewandten freien Umfangsrand axial in die Überlappung mit dem Statordichtsteg ragen, vorzugsweise in die am Statordeckel befindliche Dichtnut eintauchen.

Der Rotortopf und der Statordeckel bilden vorteilhafterweise gemeinsam bereits ein als Montageeinheit montiertes oder montierbares Gehäuse des Elektromotors. Im montierten Zustand dreht im Fahrbetrieb entsprechend von außen sichtbar ein Gehäuseteil des Motors, nämlich der Rotortopf. Der Rotortopf ist außen daher über die Umfangswand und den Boden vorzugsweise glatt. Bildet der Boden des Rotors wie bevorzugt eine vom Hinterrad axial abgewandte Gehäusewand kann diese auch optisch auffallend gestaltet sein, um die Besonderheit eines drehenden Motorgehäuses auch dem Design nach hervorzuheben.

Um einen Motor mit einer geringen axialen Dicke zu erhalten, kann der Stator so aufgebaut sein, dass ein dünner Statordeckel axial unmittelbar und eng neben dem elektromagnetisch wirksamen Teil des Stators angeordnet ist. Vom Statordeckel kann zentral ein hülsenförmiger Trägerbereich axial abragen, der Deckel also einen radial und um die Drehachse des Rotors umlaufend von diesem zentralen Trägerbereich abragenden Flansch bilden. Der elektromagnetisch wirksame Teil des Stators kann auf dem zentralen Trägerbereich direkt axial neben dem Deckel angeordnet sein. In derartigen Ausführungen kann die axiale Dicke des Stators gleich der Summe der Dicke des Statordeckels, der axialen Dicke des elektromagnetisch wirksamen Teils des Stators und der axialen Weite eines engen Spalts sein, falls zwischen dem Deckel und dem elektromagnetisch wirksamen Teil ein Spalt vorhanden ist.

Die axiale Dicke des Rotors kann gleich der axialen Länge des Rotortopfs sein. Die axiale Dicke des Elektromotors entspricht in bevorzugten Ausführungen der axialen Dicke des elektromagnetisch wirksamen Teils des Motors plus der Dicke des Statordeckels und der Dicke des Rotortopfbodens sowie vorteilhafterweise jeweils nur eines engen Spalts, den der elektromagnetisch wirksame Teils des Motors vom Statordeckel auf der einen Seite und vom Rotortopfboden auf der anderen Seite aufweisen kann.

Die Ausbildung des Elektromotors als Außenläufer und die Formgebung des Rotors als Rotortopf und insbesondere die Verwendung des Rotortopfs unmittelbar als äußeres Motorgehäuse ermöglichen es, ein im Vergleich mit Innenläufern hohes Drehmoment bei geringer Motordrehzahl zu erzeugen und den Elektromotor sowohl radial zu seiner Drehachse als auch axial kompakt zu bauen. Ein Elektromotor mit einer für den Alltag ausreichenden Leistung kann axial in einer Dicke von unter 10 cm, vorteilhafterweise auch noch unter 7 cm ausgeführt werden, bei Außendurchmessern des Ringtopfs von weniger als 20 cm. Bei einer Nennleistung von beispielsweise 500 W kann der Motor mit einem Gesamtgewicht von unter 2 kg auskommen. Im Versuchsbetrieb hat sich ein Motor mit einer Nennleistung von 500 W, einer Masse von etwa 1.6 kg und einer Dicke von etwa 40 mm bewährt. Ein vorteilhafter Elektromotor weist entsprechend bei einer Nennleistung von wenigstens 500 W eine axiale Dicke von vorzugsweise weniger als 10 cm, bevorzugter weniger als 7 cm auf, wobei das drehende äußere Gehäuse, der Ringtopf, einen Außendurchmesser von vorzugsweise weniger als 25 cm, bevorzugter weniger als 20 cm aufweist. Bei der Dickenangabe sind eine aus dem Motorgehäuse herausgeführte Motorwelle und ein Motorritzel nicht berücksichtigt, die Dicke wird von der Außenseite des Bodens des Rotortopfs und der gegenüberliegenden Außenseite des Statordeckels gemessen. In der Massenangabe sind die Motorwelle und das Motorritzel hingegen enthalten. Abgesehen von der aus dem Gehäuse ragenden Motorwelle und dem damit drehfest verbundenen Motorritzel hat der Motor im Ganzen vorzugsweise die Form einer einfachen, zumindest im Wesentlichen glatten Kreisscheibe bzw. eines flachen Kreiszylinders.

Durch die bevorzugte Ausführung des Elektromotors als Außenläufermotor kann vorteilhafterweise jegliche Untersetzung der Rotordrehzahl auf die Drehachse des Hinterrads in der Motorkopplung und dort bevorzugt mit einem einzigen umlaufenden Zugmittel erfolge. Eine Untersetzung zwischen Rotor und Motorritzel ist nicht erforderlich. Es entspricht auch bevorzugten Ausführungen, die Drehzahl des Rotors 1:1 auf das Motorritzel zu übertragen und im Drehmomentstrang erst abwärts zu untersetzen. Vorzugsweise sind der Elektromotor und die Motorkopplung so gestaltet, dass die Drehzahl des Rotors 1:1 auf das Motorritzel übertragen wird, bevorzugt über einen Motorfreilauf, und das Motorritzel in einer einzigen Getriebestufe auf das Hinterrad abtreibt, vorzugsweise mittels eines Zahnriemens oder gegebenenfalls eines anderen Zugmittels, etwa einer Kette, auf ein auf der Drehachse des Hinterrads angeordnetes Motor-Hinterradritzel. Weitere Getriebestufen sind zwischen dem Motorritzel und dem Motor-Hinterradritzel vorteilhafterweise nicht vonnöten. Andererseits entspricht es jedoch bevorzugten Ausführungen, wenn wie weiter vorstehend ausgeführt unmittelbar am Hinterrad, vorzugsweise in einer Radnabe, ein variables Getriebe angeordnet ist und das Hinterrad vom Motor über dieses variable Getriebe angetrieben wird.

Im Tretkurbelantrieb wird von einem Tretkurbelritzel auf das genannte Tretkurbel-Hinterradiritzel vorzugsweise übersetzt, also die Drehzahl der Tretkurbel innerhalb der Tretkurbelkopplung auf das Hinterrad ins Schnelle übersetzt. Das Motor-Hinterradritzel ist vorteilhafterweise im Durchmesser wesentlich größer als das Tretkurbel-Hinterradritzel. Das um die Drehachse der Tretkurbel drehende Tretkurbelritzel ist vorteilhafterweise im Durchmesser deutlich größer als das mit der Motorwelle drehende Motorritzel. Es findet somit eine Übersetzung der Drehzahl der Tretkurbel und eine Untersetzung der Drehzahl des Elektromotors statt, was bei Ausführung des Elektromotors als Außenläufermotor vorteilhafterweise bis zum Motor-Hinterradritzel einschließlich in nur einer einzigen Getriebestufe des Elektroantriebs vonstatten gehen kann.

In bevorzugten Ausführungen ist ein auf oder an einer Motorwelle drehmomentfest angeordnetes Motorausgangsritzel auf einfache Weise austauschbar, vorzugsweise mitsamt der Motorwelle. Die einfache Austauschbarkeit ist nicht nur für Wartungs- und Reparaturarbeiten von Vorteil, sondern erleichtert auch eine flexible Anpassung des Untersetzungsverhältnisses innerhalb der Motorkopplung an die Bedürfnisse des Benutzers. Händler und auch der Benutzer selbst können den motorischen Antriebsteil sehr einfach und daher flexibel den persönlichen Bedürfnissen des jeweiligen Benutzers anpassen. Für die Anpassung können Motorritzel in unterschiedlichen Größen bzw. Zähnezahlen vorgehalten und vor Ort, beim Händler oder Benutzer, eingebaut oder ausgetauscht werden. Die Motorwelle ragt in, vorzugsweise durch einen zentralen Hohlraum des Rotors und vorzugsweise auch durch ein Gehäuse des Motors. Sie ist relativ zum Rotor mittels einer lösbaren Axialsicherung, beispielsweise mittels eines lösbaren Sicherungselements oder mehreren lösbaren Sicherungselementen, axial gesichert. Die Axialsicherung ist außerhalb des Hohlraums, vorzugsweise außerhalb des Gehäuses des Elektromotors angeordnet. Die Axialsicherung sichert die Welle in Bezug auf eine der beiden axialen Richtungen. Das oder die Sicherungselement(e) der Axialsicherung kann oder können jeweils insbesondere als Sprengring gebildet sein. Für den einfachen Austausch wird eine lösbare Axialsicherung der Motorwelle bevorzugt, grundsätzlich könnte aber stattdessen oder zusätzlich das Motorritzel relativ zur Motorwelle lösbar axial gesichert sein. Eine auf die erläuterte Weise bei gelöster Axialsicherung mitsamt des Motorritzels axial aus dem Hohlraum bewegliche Motorwelle ist jedoch hinsichtlich der Zugänglichkeit von Vorteil, insbesondere in Ausführungen, in denen das Motorritzel dem Hinterrad axial näher als der Rotor angeordnet ist. In diesen bevorzugten Ausführungen kann die lösbare Axialsicherung an der vom Motorritzel abgewandten, von außen leicht zugänglichen Seite des Hohlraums bzw. des Motorgehäuses gebildet sein.

Nicht zuletzt für eine Austauschbarkeit des Motorritzels ist es von Vorteil, wenn der Elektromotor mit der Stützeinrichtung in einem Eingriff ist, der gelockert werden kann, wobei der Eingriff vorzugsweise einen Klemmeingriff beinhaltet, und der Elektromotor im gelockerten, aber weiterhin mit der Stützeinrichtung bestehenden Eingriff relativ zu der Stützeinrichtung beweglich und in zumindest einer von mehreren unterschiedlichen Positionen blockierbar ist, vorzugsweise kraftschlüssig. Der Eingriff kann zu einem Führungseingriff weitergebildet sein, in dem der Elektromotor relativ zur Stützeinrichtung verstellbar geführt ist. Der Eingriff kann insbesondere mittels eines Langlochs und eines in das Langloch greifenden Montageelements und bevorzugter mit mehreren Paaren derartiger Eingriffselemente gebildet sein. So kann die Stützeinrichtung ein oder mehrere Langlöcher für ein oder mehrere Montageelemente des Elektromotors aufweisen. Eine Umkehrung dieser Verhältnisse ist ebenfalls denkbar, ebenso eine Kombination, in der sowohl die Stützeinrichtung als auch der Motor jeweils wenigstens ein Langloch und wenigstens ein mit dem jeweiligen Langloch zusammenwirkendes Montageelement aufweisen. Der Eingriff ist so gebildet, dass durch die Verstellung der Position des Motors relativ zur Stützeinrichtung bei weiterhin mit der Stützeinrichtung bestehendem Eingriff und ein Abstand zwischen der Drehachse des Rotors und der Drehachse des Motor-Hinterradritzels verstellt werden kann, beispielsweise um ein Zugmittel der Motorkopplung spannen oder entspannen oder insbesondere Motorritzel unterschiedlichen Umfangs mit dem gleichen Zugmittel verwenden zu können.

Ein Elektromotor für ein Radfahrzeug ist auch bereits für sich von Vorteil. Solch ein Elektromotor umfasst einen Stator und einen mit dem Stator elektromagnetisch zusammenwirkenden, relativ zum Stator um eine Motorachse drehbaren Rotor, der einen den Stator an einer Stirnseite und zumindest am äußeren Umfang umlaufend umgebenden Rotortopf umfasst, der ein im Betrieb des Elektromotors drehendes, äußeres Gehäuse des Elektromotors bildet. Solch ein Elektromotors kann zwar vorteilhaft mit jedem unter der hier beanspruchten Erfindung offenbarten Merkmal, jeweils für sich und in jeder Kombination von Merkmalen, kombiniert werden, ist aber bereits auch als solcher von Vorteil. Der Elektromotor kann zwar vorteilhafterweise entsprechend der hier beanspruchten Erfindung angeordnet sein, in der Seitenansicht auf das Radfahrzeug innerhalb eines hinteren Rahmendreiecks, er kann grundsätzlich aber auch an einem anderen Ort oder auf andere Weise als hier beschrieben am Radfahrzeug angeordnet werden. Solch ein Elektromotor ist ferner auch in anderen Verwendungen vorteilhaft.

Gegenstand der Erfindung ist auch ein Elektromotor zum Antreiben vorzugsweise eines Radfahrzeugs als solcher. Der Elektromotor umfasst einen Stator mit einem elektromagnetisch wirksamen Statorteil und einen Rotor mit einem Rotortopf, der einen Boden und eine Umfangswand aufweist und den Stator mit seinem Boden an einer Stirnseite und mit seiner Umfangswand außen umlaufend umgibt. Ein im Betrieb des Elektromotors mit dem Stator elektromagnetisch zusammenwirkender Rotorteil ist an der Umfangswand des Rotortopfs angeordnet oder bildet die Umfangswand. Der Rotortopf bildet ein im Betrieb des Elektromotors drehendes äußeres Gehäuse des Elektromotors.

Bildet der Stator dem Boden des Rotortopfs axial gegenüberliegend einen Statordeckel für den Rotortopf, kann ein besonders kompakter Motor mit einem Motorgehäuse, das vorzugsweise nur aus dem Rotortopf und dem Statordeckel besteht, erhalten werden.

Der Rotortopf bildet äußere Wandungen des Motorgehäuses, nämlich den Boden an einer Stirnseite und die Umfangswand. Zumindest bildet er einen axialen Abschnitt der Umfangswand, vorzugsweise wenigstens den überwiegenden Teil der axialen Länge der Umfangswand. Der Stator bildet vorzugsweise einen den Rotortopf wasserdicht abschließenden Statordeckel. Das mittels des Rotortopfs gebildete Motorgehäuse kapselt elektromagnetisch wirksame Teile des Motors für den praktischen Gebrauch unter den üblichen Witterungsbedingungen ausreichend dicht, insbesondere wasserdicht, ab. Es kann vorteilhafterweise die bereits diskutierte Montageeinheit bilden, so dass der Motor als kompakte, fertige Baueinheit montiert oder demontiert oder die der Position des Motors im montierten Zustand verstellt werden kann.

In bevorzugten Ausführungen weist der Stator einen Statorträger mit einem zentralen, hülsenformigen Trägerbereich und einem vom zentralen Trägerbereich nach radial außen abragenden Flanschbereich auf. An einem äußeren Umfang des Trägerbereichs ist ein elektromagnetisch wirksamer Teil des Stators angeordnet, vorzugsweise ein Spulenteil des Motors, während der Stator mit dem Flanschbereich einen Statordeckel für den Rotortopf bildet, der den Topf vorzugsweise wasserdicht abschließt. Der Rotortopf kann eine Rotorwelle umfassen, die sich vom Boden des Rotortopfs in den zentralen Trägerbereich des Stators erstreckt und dort am Statorträger in beide Drehrichtungen drehbar abgestützt ist.

Der Elektromotor ist vorzugsweise im Bereich des Statordeckels an einer Stützeinrichtung, vorzugsweise an einem Radfahrzeug, montiert oder montierbar. Der Statordeckel kann ein oder mehrere Montageelemente, beispielsweise eine oder mehrere Bohrungen oder ein oder mehrere Langlöcher oder eine oder mehrere Schrauben, für die Montage des Elektromotors an der Stützeinrichtung aufweisen.

Eine Stromquelle für den Elektromotor ist in bevorzugten Ausführungen in der Seitenansicht auf das Radfahrzeug gesehen innerhalb des Rahmens, allerdings vor dem Sitzrohr angeordnet. Das Sitzrohr bildet in bevorzugten Ausführungen mit einem Steuerrohr, das der Lagerung einer Vorderradgabel dient, einer Oberstrebe und einer Unterstrebe einen vorderen Teil des Rahmens, einen Vorderrahmen. Die Stromquelle ist in bevorzugten Ausführungen in der Seitenansicht gesehen innerhalb des Vorderrahmens angeordnet. Ein Gehäuse der Stromquelle kann nach einem weiteren vorteilhaften Aspekt der Erfindung einen überwiegenden Teil der vom Sitzrohr, dem Steuerrohr und den beiden Streben umrahmten Fläche ausfüllen, vorzugsweise füllt das Gehäuse nahezu die gesamte oder sogar die gesamte so umrahmte Fläche aus. Eine solch großflächiges Stromquellengehäuse kann vorteilhafterweise in einer geringen axialen Dicke ausgeführt sein. Vorzugsweise ist es nur wenige Zentimeter dick, relativ gesehen höchstens fünfmal, bevorzugter höchstens vier- oder dreimal so dick wie die Oberstrebe oder die Unterstrebe. Die Oberstrebe und die Unterstrebe können zweckmäßigerweise als Oberrohr und Unterrohr ausgeführt sein. Das Sitzrohr muss auch nicht unumgänglich als Rohr geformt sein, obgleich dies zweckmäßig ist. Als Sitzrohr wird auch eine nicht rohrförmige Tragsäule verstanden, die den Sitz, vorzugsweise einen Sattel, des Radfahrzeugs stützt. Dies gilt auch für das Sitzrohr unter der hier beanspruchten Erfindung. Die obere und untere Hinterstrebe, an denen vorzugsweise der Elektromotor abgestützt ist, können ebenfalls insbesondere rohrförmig sein. Am Steuerrohr stützen sich der Lenker und die Aufhängung des Vorderrads ab.

Ein derart angeordnetes, großflächiges Stromquellengehäuse zur Aufnahme einer Stromquelle kommt zwar vorzugsweise in Kombination mit der hier beanspruchten Erfindung zum Einsatz, ist aber auch bereits alleine, für sich von Vorteil. Ein eigenständiger Schutzgegenstand im Rahmen einer etwaigen Teilungsanmeldung kann demzufolge auch ein Radfahrzeug sein, das Radfahrzeug umfassend:
a) einen der Aufhängung eines Vorderrads (A) und eines Hinterrads (B) dienenden Rahmen (1-8) mit einem Sitzrohr (1), einer Oberstrebe (3), einer Unterstrebe (3) und einem mittels der Streben (3, 4) mit dem Sitzrohr (1) verbundenen Steuerrohr (2),
b) einen elektrischen Verbraucher (20), vorzugsweise Elektromotor,
c) und ein Gehäuse (9) für eine Stromquelle zur Versorgung des Verbrauchers (20) mit elektrischer Energie, wobei
d) das Stromquellengehäuse (9) im Rahmen (1-8) zwischen dem Sitzrohr (1), dem Steuerrohr (2) und den Streben (3, 4) angeordnet ist
e) und in einer Seitenansicht gesehen einen überwiegenden Teil der vom Sitzrohr (1), dem Steuerrohr (2) und den Streben (3, 4) umrahmten Fläche ausfüllt.

Das Radfahrzeug kann mit Stromquellen unterschiedlicher Kapazität, wahlweise beispielsweise 6, 12, 18 oder 24 Ah (Amperestunden) bei z. B jeweils 50 V Nennspannung ausgerüstet sein. Vorteilhafterweise besteht auch die Option einer nachträglichen Vergrößerung der Kapazität von beispielsweise 300 Wh (Wattstunden) ursprünglicher Kapazität auf 900 Wh oder eine andere Größe. Es kann ein System von Stromquellen zum Einsatz kommen, die sich in ihrer Kapazität voneinander unterscheiden, beispielsweise in natürlichen Vielfachen einer kleinsten Kapazität von x Wh, also x, 2x, 3x, ..., nx Wh. Entsprechend unterscheiden sie sich hinsichtlich ihres Volumens und ihrer Masse. Das Stromquellengehäuse ist vorteilhafterweise groß genug und dafür eingerichtet, jede der unterschiedlichen Stromquellen wahlweise aufzunehmen, beispielsweise entweder die kleinste oder die größte. Die Stromquellen und das Stromquellengehäuse können insbesondere auch so beschaffen sein, dass zwei oder mehr Stromquellen jeweils einer kleineren Kapazität im Stromquellengehäuse gleichzeitig angeordnet und zu einer Stromquelle größerer Kapazität zusammengeschlossen werden können, wodurch die Möglichkeit einer nachträglichen Ausrüstung unter Weiternutzung einer zuvor bereits vorhandenen Stromquelle gegeben wäre.

Nach noch einem Aspekt betrifft die Erfindung auch ein Fahrradrahmensystem mit einem ersten Rahmen und wenigstens einem weiteren, der Größe nach sich vom ersten Rahmen unterscheidenden zweiten Rahmen. Die unterschiedlichen Rahmen des Systems unterscheiden sich durch die Position oder die Neigung, die das Steuerrohr relativ zum Sitzrohr aufweist. Der relative Positionsunterschied besteht nur darin, dass das Steuerrohr bei den unterschiedlichen Rahmen von jeweils einem der Rahmen zum jeweils anderen gesehen parallel zu sich selbst versetzt ist. Eine derartige Positionsverschiebung kann mit einem Unterschied in der relativen Neigung kombiniert sein. Vorzugsweise sind die Steuerrohre jedoch nur parallel zu sich selbst versetzt, wenn man die unterschiedlichen Rahmen übereinanderliegend vergleicht. Das Sitzrohr ist bei den Rahmen des Systems zwischen der Oberstrebe und der Unterstrebe jeweils gleich. Der Verlauf der Oberstrebe und der Verlauf der Unterstrebe sind ebenfalls gleich, bei der genannten relativen Positionsverschiebung unterscheiden sich die Oberstreben oder die Unterstreben der unterschiedlichen Rahmen, vorzugsweise beide Streben vom jeweils anderen Rahmen, nur in der Länge. Legt man die unterschiedlichen Rahmen aufeinander, stimmen sie somit vom Sattelrohr ausgehend in Richtung auf das Steuerrohr über den weit überwiegenden Teil ihrer Längen überein und unterscheiden sich nur unmittelbar im Bereich des Steuerrohrs voneinander. Außerhalb der umrahmten Fläche kann das Sitzrohr zwischen Vorderrahmen und Sitz unterschiedliche Längen aufweisen. Die fertigungstechnisch gesehen im Grunde gleichen Rahmen können zur Herstellung von Radfahrzeugen für unterschiedlich große Fahrer verwendet werden. Bevorzugt weisen die Rahmen des Systems jeweils den gleichen Hinterbau auf, der insbesondere durch ein einfaches hinteres Rahmendreieck gebildet werden kann, wobei die unter der hier beanspruchten Erfindung gegebenen Erläuterungen zum Hinterbau vorzugsweise auch für die unterschiedlichen Rahmen des Systems gelten.

Gegenstand einer etwaigen Teilungsanmeldung kann demzufolge auch ein Fahrradsystem sein mit:
a) einem ersten Rahmen (51) und wenigstens einem der Größe nach unterschiedlichen zweiten Rahmen (52),
b) die jeweils ein Sitzrohr (1), eine Oberstrebe (3), eine Unterstrebe (3) und ein mittels der Streben (3, 4) mit dem Sitzrohr (1) verbundenes Steuerrohr (2) aufweisen, die eine im jeweiligen Rahmen (51, 52) freibleibende Rahmenfläche umgeben,
c) wobei sich bei jedem der Rahmen (51, 52) wenigstens eine der Streben (3, 4) bis zum Steuerrohr (2) erstreckt,
d) die Rahmenflächen bis nahe zum jeweiligen Steuerrohr (2) gleich
e) und durch Parallelverschiebung des Steuerrohrs (2) zu sich selbst oder eine Drehung des Steuerrohrs (2) um eine quer zur jeweiligen Rahmenfläche weisende Achse ineinander überführbar sind.

Die Oberstrebe und die Unterstrebe erstrecken sich vorzugsweise jeweils bis zum Sitzrohr des jeweiligen Rahmens (51, 52). Die Sitzrohre sind über ihre zwischen den Streben (3, 4) erstreckten Länge (1a) vorteilhafterweise gleich. So kann oder können sich die Oberstrebe des ersten Rahmens (51) nur in der Länge von der Oberstrebe des zweiten Rahmens (52) oder die Unterstrebe (4) des ersten Rahmens (51) nur in der Länge von der Unterstrebe (4) des zweiten Rahmens (52) unterscheiden.

Vorteilhaft ist, wenn wenigstens eines der folgenden Merkmale erfüllt ist:
a) die Oberstrebe (3) des ersten Rahmens (51) hat eine andere Länge als die Oberstrebe (3) des zweiten Rahmens (52) und die Oberstreben (3) unterscheiden sich vorzugsweise nur in Bezug auf die Länge voneinander;
b) die Unterstrebe (4) des ersten Rahmens (51) hat eine andere Länge hat als die Unterstrebe (4) des zweiten Rahmens (52) und die Unterstreben (4) unterscheiden sich vorzugsweise nur in Bezug auf die Länge voneinander;
c) die Oberstrebe (3) und die Unterstreben (4) erstrecken sich bei jedem der Rahmen (51, 52) vom Sitzrohr (1) bis zum Steuerrohr (2);
d) die Position des Steuerrohrs (2) variiert relativ zum Sitzrohr (1) in Fahrtrichtung (X) und in Höhenrichtung (Z);
e) das Sitzrohr (1) weist bei jedem der Rahmen (51, 52) einen über die Oberstrebe (3) des jeweiligen Rahmens (51, 52) hinausragenden oberen Abschnitt (1b) auf, und der obere Abschnitt (1b) des ersten Rahmens (51) hat eine andere Länge als der obere Abschnitt (1b) des zweiten Rahmens (52).

In einer Weiterentwicklung unterscheidet sich das Steuerrohr des ersten Rahmens als solches in der Länge vom Steuerrohr des zweiten Rahmens, vorzugsweise nur in der Länge. Die Länge des Steuerrohrs wird vorzugsweise angepasst an die in d) beschriebene Variation der Position des Steuerrohrs variiert. Dabei wird die Länge so variiert, dass die Variation in Höhenrichtung kompensiert wird, die Längenvariation also die Höhenpositionsvariation ausgleicht, und für die unterschiedlichen Rahmen jeweils gleichlange Vordergabeln und gleichgroße Vorderräder verwendet werden können.

Vorstehend zu den Erfindungsaspekten in Klammern angegebene Bezugszeichen beziehen sich auf die nachfolgend erläuterten Ausführungsbeispiele, beschränkten den jeweiligen Erfindungsaspekt jedoch nicht, sie dienen lediglich der Erleichterung des Verständnisses.

Vorteilhafte Merkmale werden auch in den Unteransprüchen und deren Kombinationen beschrieben.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend beschriebenen Ausgestaltungen, auch die weiteren Erfindungsaspekte, vorteilhaft weiter. Es zeigen:
- Figur 1: ein Radfahrzeug mit einem Tretkurbel- und Elektroantrieb in einer Seitenansicht,
- Figur 2: einen Rahmen des Radfahrzeugs in der Seitenansicht,
- Figur 3: einen hinteren Teil des Radfahrzeugs in einem Längsschnitt,
- Figur 4: den Tretkurbelantrieb im Bereich der Tretkurbel in einem Längsschnitt,
- Figur 5: ein Hinterrad des Radfahrzeugs im Bereich der Hinterradnabe in einem Längsteilschnitt,
- Figur 6: ein Doppelritzel aus einem Tretkurbel-Hinterradritzel und einem MotorHinterradritzel,
- Figur 7: einen Elektromotor des Elektroantriebs in einem Längsschnitt,
- Figur 8: einen modifizierten Elektromotor des Elektroantriebs in einem Längsschnitt,
- Figur 9: eine Motorkopplung in einer alternativen Ausführung,
- Figur 10: einen weiterentwickelten Tretkurbelantrieb,
- Figur 11: einen ersten Rahmen eines Fahrradrahmensystems,
- Figur 12: einen zweiten Rahmen des Fahrradrahmensystems,
- Figur 13: einen dritten Rahmen des Fahrradrahmensystems,
- Figur 14: die in Deckung gebrachten Rahmen des Fahrradrahmensystems,
- Figur 15: ein Radfahrzeug mit einer Federgabel in einer Seitenansicht und
- Figur 16: das Radfahrzeug der Figur 15 in einer vertikalen Draufsicht.

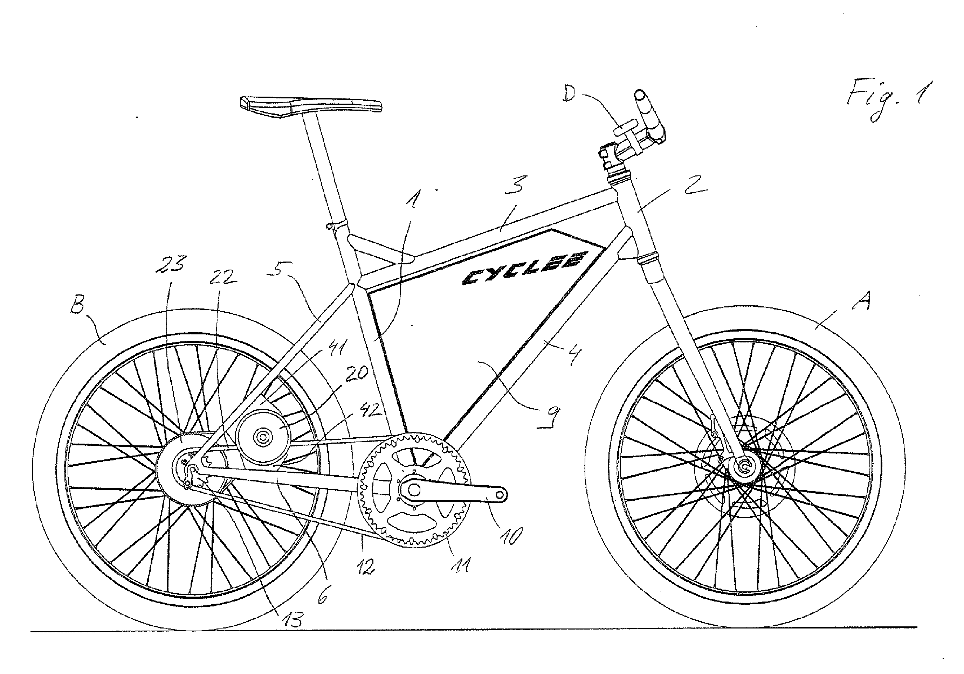

Figur 1 zeigt ein Radfahrzeug mit einem Tretkurbel- und Elektroantrieb am Beispiel eines Fahrrads. An einem Rahmen des Radfahrzeugs sind ein Vorderrad A und ein Hinterrad B aufgehängt. Das Radfahrzeug verfügt über einen Tretkurbelantrieb mit einer Tretkurbel 10, die über ein Tretkurbelritzel 11, ein beispielsweise von einer Kette gebildetes Zugmittel 12 und ein Tretkurbel-Hinterradritzel 13 das Hinterrad B drehantreiben kann. Das Radfahrzeug verfügt ferner über einen Elektroantrieb mit einem Elektromotor 20, der über ein in Figur 1 nicht erkennbares Motorritzel, ein beispielhaft wie bevorzugt als Zahnriemen ausgeführtes Zugmittel 22 und ein Motor-Hinterradritzel 23 ebenfalls das Hinterrad B drehantreiben kann. Der Elektromotor 20 ist in der in Figur 1. gezeigten Seitenansicht gesehen innerhalb eines hinteren Rahmendreiecks des Rahmens angeordnet. Mit D ist ein Display für den Fahrer bezeichnet.

Der Rahmen umfasst in an sich bekannter Weise ein Sitz- bzw. Sattelrohr 1, ein Steuerrohr 2, eine Oberstrebe 3 vorzugsweise in Form eines Oberrohrs und eine Unterstrebe 4 vorzugsweise in Form eines Unterrohrs, eine obere Hinterradstrebe 5 und eine untere Hinterradstrebe 6. Das Sitzrohr 1 teilt den Rahmen in einen Vorderbau, an dem das Vorderrad A aufgehängt ist, und einen Hinterbau, an dem das Hinterrad B aufgehängt ist. Der Vorderbau ist als Vorderrahmen und der Hinterbau als das bereits genannte Rahmendreieck ausgeführt. Den Vorderrahmen bilden somit das Sitzrohr 1, das Steuerrohr und die Streben 3 und 4. Das hintere Rahmendreieck wird vom Sitzrohr 1 und zumindest im Wesentlichen von den Hinterradstreben 5 und 6 gebildet. Die Streben 3 bis 6 sind mit dem Sitzrohr 1 fest und steif verbunden, vorzugsweise jeweils mittels Schweißverbindung. Die Streben 3 und 4 sind mit dem Steuerrohr 2 ebenfalls fest und steif verbunden, vorzugsweise jeweils mittels Schweißverbindung. Der Vorderrahmen 1-4 weist eine vom Sitzrohr 1, dem Steuerrohr 2 und den Streben 3 und 4 umrahmte, beispielhaft vierseitige Fläche auf, in der eine Stromquelle, vorzugsweise in Form eines wiederaufladbaren elektrischen Akkumulators, zur Versorgung elektrischer Verbraucher, zumindest des Elektromotors 20, mit elektrischer Energie angeordnet ist. Die Stromquelle ist in einem an die umrahmte Fläche angepasst geformten Stromquellengehäuse 9 aufgenommen. Das Stromquellengehäuse 9 füllt den weit überwiegenden Teil der umrahmten Fläche des Vorderrahmens 1-4 aus und kann dementsprechend axial, parallel zu den Drehachsen der Räder A und B, in einer geringen Dicke ausgeführt werden, so dass es den Fahrer beim Treten nicht behindert. Seine zwischen den Außenseiten gemessene axiale Dicke, die vorzugsweise über die gesamte Seitenfläche konstant ist, beträgt vorteilhafterweise höchstens 10 cm. Die Dicke beträgt vorzugsweise höchstens das Vierfache, besser noch höchstens das Dreifache des dicksten der Rahmenteile 1 bis 4 des Vorderrahmens 1-4.

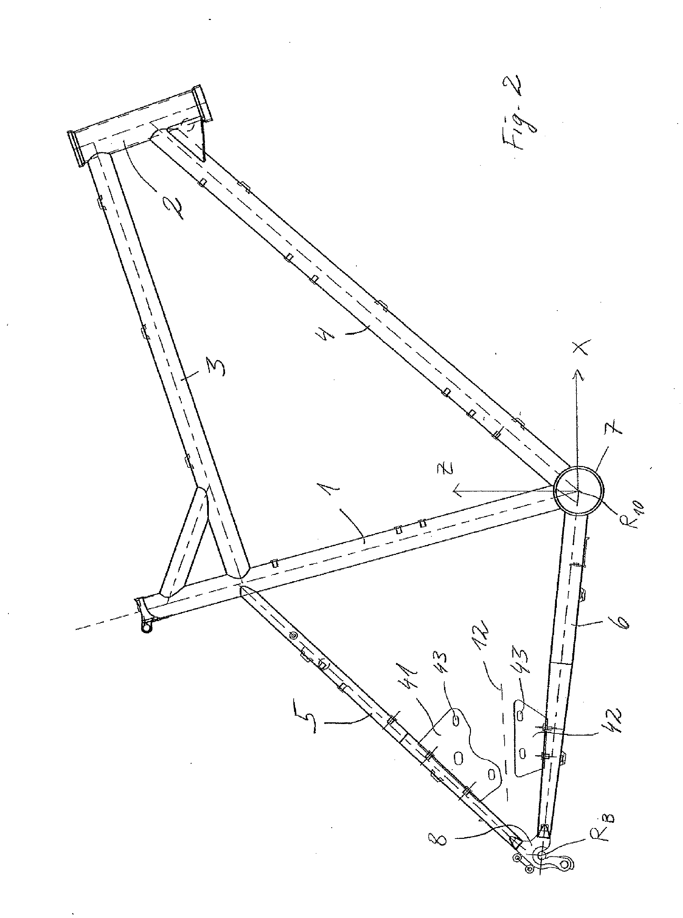

Figur 2 zeigt den Rahmen als solchen, herausgelöst aus dem Radfahrzeug, ebenfalls in der Seitenansicht. Erkennbar sind ein Tretlagergehäuse 7, das wie bevorzugt beispielhaft am unteren Ende des Sitzrohrs 1 angeordnet ist und an dem das Sitzrohr 1, die Unterstrebe 4 und die untere Hinterradstrebe 6 aneinander stoßen. Das Sitzrohr 1 und die Streben 4 und 6 sind mit dem Tretlagergehäuse 7 jeweils fest und steif verbunden, vorzugsweise jeweils verschweißt. Die Hinterradstreben 5 und 6 laufen zur Drehachse R_{B} des Hinterrads B hin aufeinander zu und sind in unmittelbarer Nähe der Drehachse R_{B} über eine Aufhängungsstruktur 8, die ein nach unten offenes Auge für die Aufnahme der Hinterradachse aufweist, fest miteinander verbunden, vorzugsweise mit der Aufhängungsstruktur 8 jeweils verschweißt. Auf der anderen Seite des Hinterrads B sind zwei ebensolche Hinterradstreben 5 und 6 mit einer ebensolchen Aufhängungsstruktur 8 angeordnet, die jedoch in der Seitenansicht wegen der Überdeckung mit den dargestellten rechten Streben 5 und 6 nicht erkennbar sind. Im Bereich des Vorderrahmens 1 bis 4 sind auch Befestigungsstellen für das Gehäuse der Stromquelle 9 erkennbar. Befestigungsstellen sind jeweils am Sitzrohr 1 und den Streben 3 und 4 vorgesehen, das Steuerrohr 2 ist frei von Befestigungsstellen.

Der Elektromotor 20 ist, wie in Figur 1 erkennbar, mittels einer Stützeinrichtung sowohl an der oberen Hinterradsstrebe 5 als auch an der unteren Hinterradsstrebe 6 abgestützt, wodurch eine feste und steife Halterung des Elektromotors 20 gewährleistet wird. Wie in Figur 2 erkennbar ist die Stützeinrichtung zweigeteilt und umfasst eine obere Stütze 41 und eine von der oberen Stütze 41 separate untere Stütze 42. Der Elektromotor 20 ist mit beiden Stützen 41 und 42 und mittels der oberen Stütze 41 fest mit der oberen Hinterradstrebe 5 und mittels der unteren Stütze 42 fest mit der unteren Hinterradstütze 6 verbunden. Beispielhaft sind die Stützen 41 und 42 mit der jeweiligen Hinterradstrebe 5 und 6 durch Schraubverbindung verbunden. Die Stützeinrichtung 41, 42 ist durch die Unterteilung in obere Stütze 41 und untere Stütze 42 derart unterteilt, dass in der Seitenansicht gesehen das Obertrum des Zugmittels 12, das die Tretkurbel 10 mit dem Hinterrad B koppelt, innerhalb eines zwischen den Stützen 41 und 42 frei bleibenden Raums verläuft. Das Zugmittel 12 ist in Figur 2 strichliert angedeutet.

Die Stützen 41 und 42 sind jeweils mit mehreren Langlöchern 43 versehen, beispielhaft mit jeweils zwei Langlöchern 43. Die Langlöcher 43 dienen der Befestigung des Elektromotors 20 und erlauben es, den Elektromotor 20 im montierten Zustand, lediglich nach einem Lockern seiner Befestigung an den Stützen 41 und 42, relative zu den Stützen 41 und 42 zu verstellen.

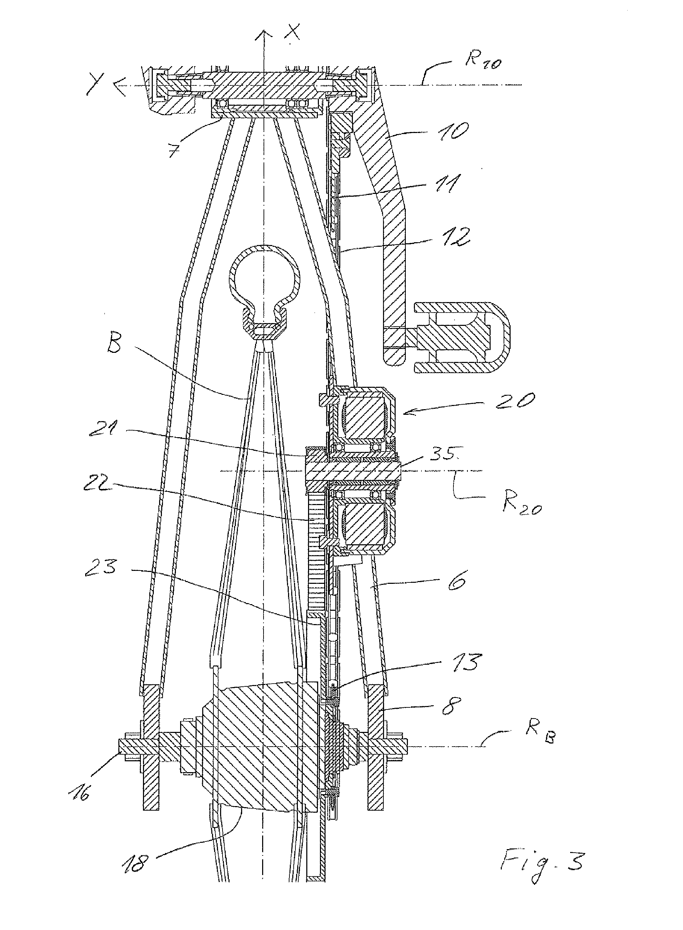

Figur 3 zeigt den hinteren Teil des Radfahrzeugs in einem Längsschnitt, der sich durch die Drehachse R_{B} des Hinterrads B, die Motorachse R₂₀ und die Tretkurbelachse R₁₀ erstreckt und zwischen den Drehachsen gerade verläuft. Erkennbar ist, dass der Elektromotor 20 wie bevorzugt, aber dennoch nur beispielhaft, nicht nur in der Seitenansicht der Figur 1, sondern auch axial, parallel zu den Drehachsen der Räder A und B, zwischen die den Motor 20 abstützenden Hinterradstreben 5 und 6 ragt, mit diesen also axial, in Querrichtung Y des Radfahrzeugs überlappt. Die den Elektromotor 20 mit dem Hinterrad B drehmomentübertragend koppelnde Motorkopplung, die vom Motorritzel 21, dem Zugmittel 22 und dem Motor-Hinterradritzel 23 gebildet wird, ist axial neben der Tretkurbelkopplung, gebildet vom Tretkurbelritzel 11, dem Zugmittel 12 und dem Tretkurbel-Hinterradritzel 13, dem Hinterrad B näher als die Tretkurbelkopplung 11-13 angeordnet. Das Tretkurbel-Zugmittel 12 verläuft weiter außen als das Motor-Zugmittel 22. Der Elektromotor 20 allerdings ragt axial nach außen über das Tretkurbel-Zugmittel 12 hinaus vor. Beispielhaft wie bevorzugt befindet sich der gesamte elektromagnetische Teil des Elektromotors 20 außen vor dem Zugmittel 12. In der Folge erstreckt sich eine Motorwelle 35, die mit dem Motorritzel 21 eine Dreheinheit bildet, von außen über das Tretkurbel-Zugmittel 12 in Richtung auf das Hinterrad B hinaus.

Der Elektromotor 20 ist, wie am besten in Figur 1 erkennbar, im hinteren Rahmendreieck B, der Drehachse R_{B} des Hinterrads B so nahe angeordnet, dass er mit dem Obertrum des Tretkurbel-Zugmittels 12 auch in der Seitenansicht überlappt, also den zwischen den Stützen 41 und 42 verlaufenden Abschnitt des Zugmittels 12 axial außen überdeckt. Aufgrund dieser der Drehachse R_{B} nahen Anordnung kann die Verbindung zwischen dem Elektromotor 20 und der oberen Hinterradstrebe 5 und ebenso die Verbindung mit der unteren Hinterradstrebe 6 in einer geringen Länge ausgeführt werden, was der Steifigkeit der Halterung des Elektromotors 20 zugute kommt. Die beiden Stützen 41 und 42 sind, wie Figur 2 zeigt, stummelhaft kurz. Aufgrund der Teilung der Stützeinrichtung 41, 42 kann ein Gehäuse des Elektromotors 20 an seiner dem Hinterrad B zugewandten Innenseite axial bis in unmittelbare Nähe des Tretkurbel-Zugmittels 12 reichen. Das Zugmittel 12 kann nicht nur in der Seitenansicht, sondern auch axial gesehen zwischen den Stützen 41 und 42 hindurch laufen, zumindest mit einem Teil seiner axialen Breite. Der Elektromotor 20 ist der Drehachse R_{B} des Hinterrads B so nah angeordnet und radial zur Motorachse R₂₀ gesehen so schmal, dass er außerhalb des Tretkurbelkreises liegt und beim Treten nicht mit der Tretkurbel 10 in Berührung gelangen kann. Anordnung und Abmessung des Elektromotors 20 sind vorteilhafterweise so gewählt, dass er beim Treten auch nicht mit dem auf der Pedale stehenden Fuß des Fahrers in Berührung kommt. Diesbezüglich kommt dem Elektromotor 20 seine geringe axiale Dicke zugute. Seine axiale Dicke beträgt nur wenige Zentimeter, vorzugsweise weniger als 10 cm. Günstig ist in dieser Hinsicht neben der geringen Dicke auch die Anordnung der Motorkopplung 21-23 innen von der Tretkurbelkopplung 11-13.

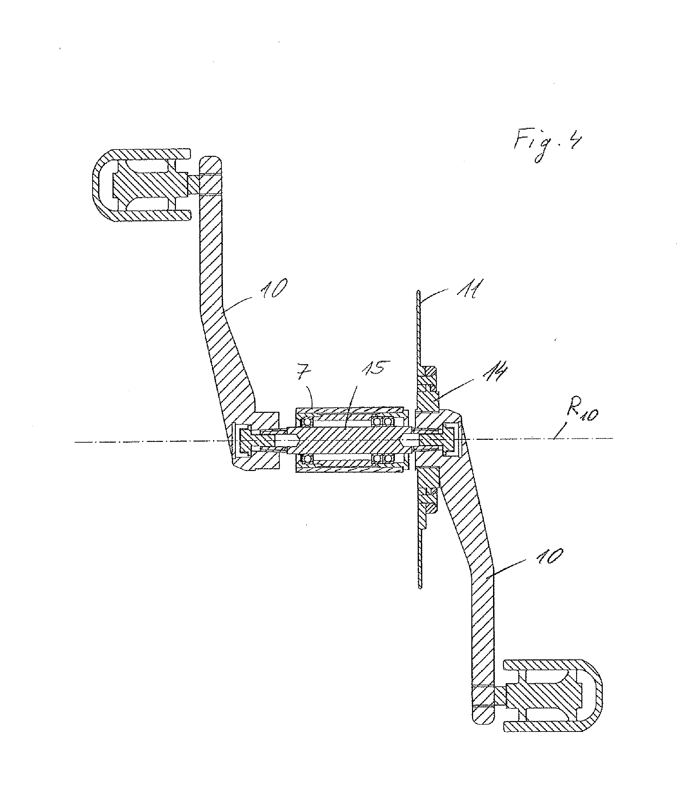

Figur 4 zeigt ein Tretlager des Radfahrzeugs in einem die Drehachse R₁₀ enthaltenden Längsschnitt. Die beiden Tretkurbeln 10 sind über eine durch das Tretlagergehäuse 7 führende Tretkurbelwelle 15 drehmomentübertragend miteinander verbunden. Das Drehmoment der Tretkurbeln 10 wird auf der Tretkurbelwelle 15 vereinigt und in eine Antriebsdrehrichtung über einen Tretkurbelfreilauf 14 auf das Tretkurbelritzel 11 übertragen. Gegen die Antriebsdrehrichtung überträgt der Freilauf 14 von unvermeidbaren Reibungskräften abgesehen kein Drehmoment. Das Tretkurbelritzel 11 kann somit in die Antriebsdrehrichtung zwar schneller als die Tretkurbelwelle 15 drehen, aber gegen die Antriebsdrehrichtung keine relative Drehbewegung zu dieser ausführen.

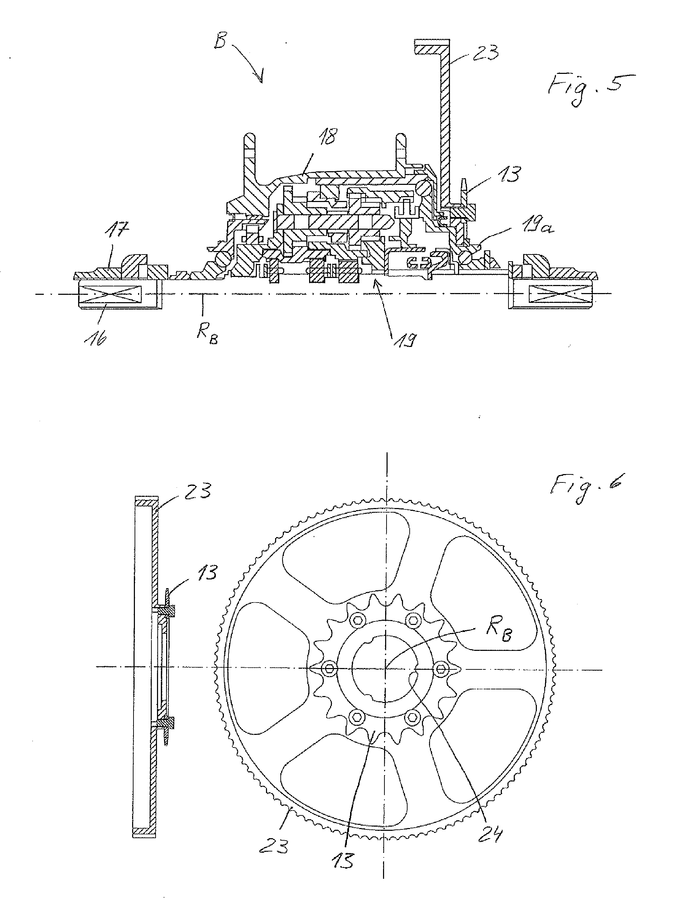

Figur 5 zeigt den zentralen Bereich des Hinterrads B in einem Längsschnitt. Dargestellt ist nur eine Hälfte des Längsschnitts. Das Hinterrad B ist mit seiner Radachse 16 in der vom Rahmen 1-8 gebildeten Aufhängung, beispielhaft der Aufhängungsstruktur 8 (Figur 2), aufgenommen und mittels eines linken und eines rechten Sicherungselements 17, die wie üblich als Gewindemuttern gebildet sein können, gesichert. In einer Nabe 18 des Hinterrads B ist ein variables Getriebe 19 in Form eines schaltbaren Getriebes angeordnet. Das Getriebe 19 ist wie bevorzugt, obgleich nur beispielhaft, als Planetengetriebe ausgeführt. Die beiden Hinterradritzel 13 und 23 sind drehsteif mit einem gemeinsamen Getriebeeingangsglied 19a des Getriebes 19 verbunden, so dass die Ritzel 13 und 23 mit dem Getriebeeingangsglied 19a wie eine Dreheinheit gemeinsam drehen, wenn über das Tretkurbel-Hinterradritzel 13 ein Drehmoment der Tretkurbel 10 oder über das Motor-Hinterradritzel 23 ein Drehmoment des Elektromotors 20 wirkt oder wirken. Die relativ zum Rahmen 1-8 nicht drehbare Radachse 16 bildet das Stütz- oder Stellglied des Getriebes 19 und die Radnabe 18 das relativ dazu drehbewegliche Abtriebsglied. Da der Motor 20 das Hinterrad B über dessen internes Getriebe 19 antreibt, kann die Drehzahl des Motors 20 nochmals untersetzt werden, zusätzlich zur bevorzugt nur einstufigen Untersetzung innerhalb der Motorkopplung 21-23, wobei das Untersetzungsverhältnis dem Tretkurbelantrieb entsprechend sogar variabel, auswählbar ist.

In Figur 6 sind die Hinterradritzel 13 und 23 als solche im nicht montierten Zustand dargestellt. Die Ritzel 13 und 23 sind zu einer Einheit vereint. Sie bilden miteinander eine Montageeinheit und mit dem Getriebeeingangsglied 19a im montierten Zustand eine Dreheinheit. Sie sind miteinander beispielhaft verschraubt, könnten alternativ aber beispielsweise auch stoffschlüssig miteinander verbunden und, soweit fertigungstechnisch möglich, auch in einem Stück geformt sein. Im Ausführungsbeispiel dient das Motor-Hinterradritzel 23 der Befestigung des aus den beiden Ritzeln 13 und 23 gebildeten Doppelritzels 13, 23. Das Tretkurbel-Hinterradritzel 13 ist auf das innenliegende Motor-Hinterradritzel 23 geschraubt. Zum Zwecke der drehfesten Verbindung mit dem gemeinsamen Getriebeeingangsglied 19a weist das Doppelritzel 13, 23, im Ausführungsbeispiel das Motor-Hinterradritzel 23, an einer Innenseite nach einwärts in Richtung auf die Drehachse R_{B} vorragende Nasen 24 auf, die in entsprechende axiale Nuten des Getriebeeingangsglieds 19a eingreifen, und im Eingriff das Drehmoment formschlüssig in das Getriebeeingangsglied 19a einleiten. Das Hinterrad B kann ein herkömmliches sein, da es keiner Anpassung an den Elektroantrieb bedarf Das Tretkurbel-Hinterradritzel 13 kann insbesondere ein herkömmliches Tretkurbel-Hinterradritzel sein.

In Umkehrung der Montageverhältnisse kann in einem alternativen Doppelritzel 13, 23 das Tretkurbel-Hinterradritzel 13 das Montageritzel und das Motor-Hinterradritzel 23 erst über das Ritzel 13 mit dem Getriebeeingangsglied 19a verbunden sein oder werden. Bei Verwendbarkeit eines herkömmlichen Tretkurbel-Hinterradritzels 13 kann in der alternativen Ausführung das Motor-Hinterradritzel 23 vereinfacht werden. Da das Tretkurbel-Hinterradritzel 13 üblicherweise ein Stahlritzel und das Motor-Hinterradritzel 23 vorzugsweise ein Leichtmetallritzel ist, beispielsweise aus Aluminium oder einer Aluminiumlegierung, wäre die Umkehrung auch hinsichtlich der Belastbarkeit von Vorteil.

Wegen des Abtriebs des Tretkurbelantriebs und auch des Motorantriebs auf das gleiche Getriebeeingangsglied 19a wird das Schaltgetriebe 19, die Nabenschaltung, für beide Antriebe gleichermaßen genutzt. Vorteilhaft für die Handhabung ist auch, dass sich der Fahrer nur mit einer einzigen Schaltung beschäftigen muss. Auf der Drehachse R_{B} des Hinterrads B ist auch kein Freilauf angeordnet, der Tretkurbelfreilauf 14 und auch ein Motorfreilauf sind von der Drehachse R_{B} abgerückt. Dies hat den Vorteil, dass in dem neben der Radnabe 18 nur begrenzt zur Verfügung stehenden Raum kein Freilauf untergebracht werden muss, wodurch die Integration von Tretkurbelantrieb und Elektroantrieb erleichtert wird.

Das Motor-Hinterradritzel 23 weist an seinem äußeren Umfang eine Verzahnung mit einer deutlich feineren Zahnteilung als das Tretkurbel-Hinterradritzel 13 auf. Die Verzahnung des Ritzels 23 weist in bevorzugten Ausführungen einen Modul d/z < 1.2 auf, wobei d der Durchmesser des Teilkreises und z die Anzahl der Zähne des Ritzels 13 sind. Kleine, insbesondere kurze Zähne sind vorteilhaft für die Reduzierung des Verschleißes und von Geräuschen in der Motorkopplung 21, 22 und 23. Als Zugmittel 22 kann ein vorteilhaft flacher Zahnriemen verwendet werden. Bevorzugt wird ein Carbonriemen, also ein mit Kohlefasern verstärkter Kunststoffriemen verwendet.

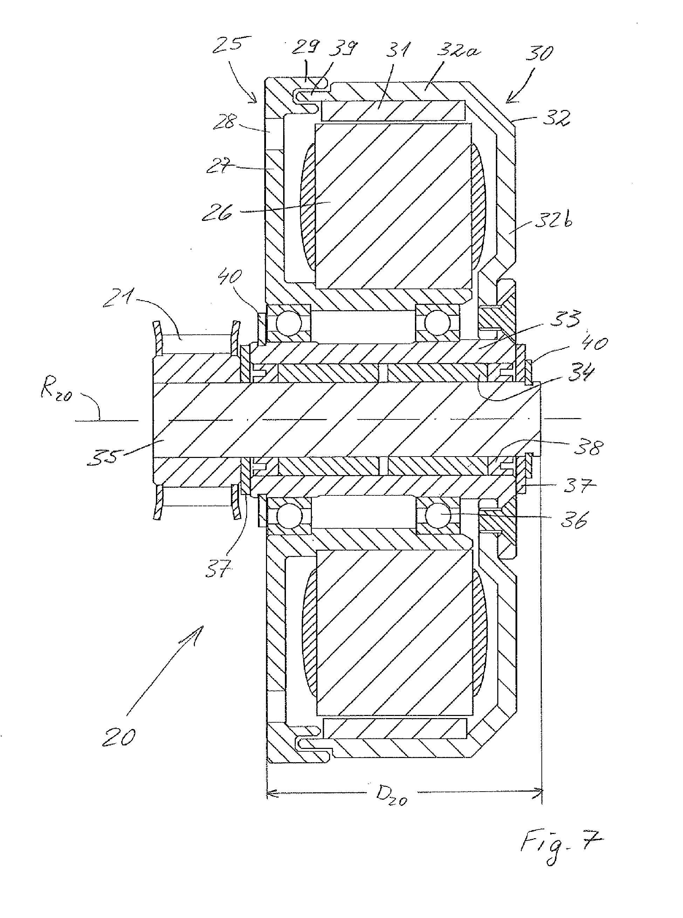

Figur 7 zeigt den Elektromotor 20 als solchen, losgelöst vom Rahmen 1-8, in einem die Motorachse R₂₀ enthaltenden Längsschnitt. Der Elektromotor 20 umfasst einen im montierten Zustand fest mit dem Rahmen 1-8, nämlich über die Stützen 41 und 42 fest mit den Hinterradstreben 5 und 6 (Figur 1) verbundenen Stator 25 und einen relativ zum Stator 25 um die Motorachse R₂₀ drehbaren Rotor 30. Der Rotor 30 umfasst einen Rotorträger 32 für einen Polring 31. Der Rotorträger 32 bildet einen den Polring 31 radial außen umgebenden Rückschlussring 32. Der Polring 31 wird von einer Mehrzahl von Dauermagneten gebildet, die über den Umfang verteilt in alternierender Polfolge angeordnet sind, beispielhaft an einer Innenseite des Rückschlussrings 32a. Der Polring 31 umgibt unmittelbar einen Spulenteil 26, d. h. die Feldwicklung, des Stators 25 unter Freilassung eines schmalen Ringspalts. Der Rückschlussring 32a ist an einem axialen Ende über einen Verbindungsabschnitt 32b mit einer Rotorwelle 33 in Bezug auf beide Richtungen einer Drehbewegung um die Motorachse R₂₀ drehfest verbunden.

Der Rotor 30 bildet einen Rotortopf. Der Rückschlussring 32a bildet im Bereich des Polrings 31 eine Umfangswand und mit seinem vom Hinterrad B abgewandten Verbindungsabschnitt 32b einen Boden des Rotortopfs. Genauer gesagt bilden der Rückschlussring 32a, der Verbindungsabschnitt 32b und die damit fest verbundene Rotorwelle 33 einen Ringtopf. Die Motorwelle 35 erstreckt sich in diesen Ringtopf, beispielhaft durch den Ringtopf, nämlich in bzw. durch die Rotorwelle 33. Der Spulenteil 26 ist fest, nicht beweglich, mit einem der Befestigung des Elektromotors 20 am Rahmen 1-8 dienenden Statorträger 27 verbunden. Der Statorträger 27 weist einen zentralen, hülsenförmigen Trägerbereich auf, an dessen äußeren Umfang der Spulenteil 26 angeordnet ist, und einen vom zentralen Trägerbereich nach radial außen scheibenförmig abragenden Flanschbereich auf, in dessen Bereich der Elektromotor 20 mit der Stützeinrichtung 41, 42 verbunden ist oder montiert werden kann. Im Flanschbereich sind mehrere Montageelemente 28, beispielhaft Durchgänge für Schrauben, angeordnet, um den Motor 20 mittels weiteren Montageelementen, beispielhaft Muttern, mit der Stützeinrichtung 41, 42 lösbar zu verbinden.

Die Rotorwelle 33 erstreckt sich von dem vom Hinterrad B aus gesehen axial äußeren Verbindungsabschnitt 32b des Rückschlussrings 32, also vom Boden 32b des Rotortopfs 31-33 in den zentralen Trägerbereich des Statordeckels 27 hinein und ist dort am Statorträger 27 mittels Drehlagern 36 drehbar abgestützt. Die Rotorwelle 33 weist einen Verbindungsflansch 33a auf, in dessen Bereich sie mit dem Verbindungsabschnitt 32b des Rotorträgers 32 fest, aber lösbar verbunden, beispielhaft verschraubt ist. Die Drehlager 36 sind in einem Ringspalt zwischen der Rotorwelle 33 und dem die Rotorwelle 33 umgebenden zentralen Trägerbereich des Statorträgers 27 angeordnet. Die Rotorwelle 33 erstreckt sich wie bevorzugt beispielhaft durch den Statorträger 27 und in Richtung auf das Hinterrad B über den Statorträger 27 hinaus. Die Motorwelle 35 erstreckt sich durch die Rotorwelle 33 und ist an ihrem äußeren axialen Ende mittels eines Sicherungselements 40, beispielhaft ein Sicherungsring, relativ zur Rotorwelle 33 axial gesichert. Innen sichert ein weiteres solches Sicherungselement 40 die Rotorwelle 33 am dortigen Drehlager 36. Die Sicherungselemente 40 sind vorzugsweise lösbar. Im Ringspalt zwischen den beiden Wellen 33 und 35 ist ein Motorfreilauf 34 angeordnet. Der Motorfreilauf 34 überträgt das Drehmoment des Elektromotors 20 in eine Antriebsdrehrichtung auf die Motorwelle 35, überträgt von unvermeidbaren Reibungskräften abgesehen aber kein Drehmoment in die Gegendrehrichtung. Der Motorfreilauf 34 ist in einem Ringspalt zwischen der Motorwelle 35 und der diese umgebenden Rotorwelle 33 angeordnet. Der Freilauf 34 kann insbesondere als Hülsenfreilauf gebildet sein. Zu vorteilhaften Merkmalen des Motorfreilaufs 34 werden beispielhaft wieder die bereits genannten WO 2009/127263 A1 und PCT/EP2009/055308 in Bezug genommen. Die Motorwelle 35 ist über den Motorfreilauf 34 sowie eine linke und eine rechte Anlaufscheibe 37 an der Rotorwelle 33 abgestützt. Das Motorritzel 21 ist mit der Motorwelle 35 drehfest verbunden, bildet also mit dieser eine Dreheinheit. Mit 38 sind ein den Spalt mit dem Freilauf 34 abdichtendes linkes und rechtes Dichtelement 38 bezeichnet.

Der Stator 25 und der Rotor 30 bilden miteinander unmittelbar das Gehäuse des Elektromotors 20. Dieser verfügt über keine weitere Gehäusestruktur zur Abdeckung des Spulenteils 26 und des Polrings 31. Genauer gesagt bilden seitens des Rotors 30 der Rotorträger 32 und die Rotorwelle 33 und seitens des Stators 25 dessen Statorträger 27 das Motorgehäuse. Der vom Rotorträger 32 und der Rotorwelle 33 gebildete Rotortopf ist in dieser Ausbildung des Gehäuses ein äußeres Drehgehäuse, das sich im Betrieb des Elektromotors 20 dreht. Der Statorträger 27 bildet insbesondere mit seinem Flanschbereich einen Statordeckel 27 für den im Motorbetrieb relativ dazu drehenden Rotortopf 32, 33. Im zentralen Bereich ergibt sich darüber hinaus eine geschachtelte Anordnung von Rotorwelle 33 3 und dem hülsenformigen Zentralbereich des Statorträgers 37.

Für die äußere Abdichtung des aus Rotortopf 32, 33 und Statordeckel 27 gebildeten Motorgehäuses sorgen der Rotortopf und der Statordeckel und eine berührungsfrei wirkende Wellendichtung. Die Wellendichtung wird von einem um die Motorachse R₂₀ umlaufenden Dichtsteg 29 des Stators 25 und einen damit dichtend zusammenwirkenden Dichtsteg 39 des Rotors 30 gebildet. Der Dichtsteg 29 ist am Flanschbereich des Statorträgers 27 radial außen umlaufend geformt. Der Dichtsteg 39 des Rotors 30 bildet einen freien äußeren Umfangsrand der Umfangswand 32a des Rotortopfs 32, 33. Der Dichtsteg 29 weist umlaufend eine zum Dichtsteg 39 hin offene Nut auf, eine Dichtnut, in die der Dichtsteg 39 hineinragt, sozusagen eintaucht. Die Dichtstege 29 und 39 bilden zusammenwirkend eine Labyrinthdichtung. Zu bemerken ist noch, dass der Dichtsteg 39 des Rotors 30 in axialer Richtung in die entsprechend zugewandte Dichtnut des Dichtstegs 29 hineinragt. Aufgrund dieser Ausrichtung der Wellendichtung 29, 39 kann die Umfangswand 32a des Ringtopfs 32, 33 an ihrer Innenseite einfach axial zum freien Ende, dem Dichtsteg 39 hin, glatt auslaufen, wodurch die Anbringung des Polrings 31 oder der einzelnen, den Polring 31 bildenden Magnete an der Innenseite der Umfangswand 32 erleichtert wird. Die Bereitstellung des Motorgehäuses unmittelbar durch den Stator 25 und den Rotor 30 trägt zur Verkleinerung des Elektromotors 20 bei. Der Durchmesser des Polrings 31 kann so groß oder nahezu so groß wie der Außendurchmesser des Elektromotors 20 sein. Das Verhältnis des elektromagnetisch relevanten Durchmessers, hier des Polrings 31, zum Außendurchmesser des Motorgehäuses kann maximiert werden. Hierdurch kann das Nenndrehmoment des Elektromotors 20 bei gegebenen äußeren Abmessungen erhöht werden, was wiederum eine Verringerung der Drehzahl und somit eine einfachere Adaption des Elektroantriebs an den Tretkurbelantrieb ermöglicht.

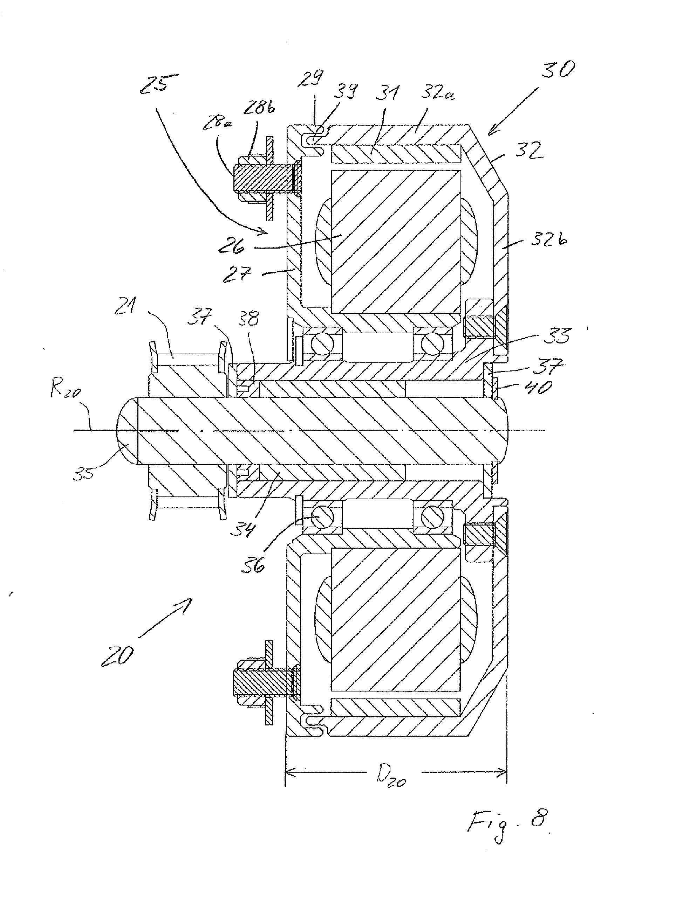

Figur 8 zeigt einen modifizierten Elektromotor 20. Für funktionsgleiche Motorkomponenten werden die Bezugszeichen des Motors 20 der Figur 7 verwendet. Der modifizierte Motor 20 weicht hinsichtlich der Bildung des Rotortopfs 32, 33 vom Motor 20 der Figur 7 ab, genauer gesagt hinsichtlich der Verbindung von Rotorträger 32 und Rotorwelle 33. Der Verbindungsabschnitt 32b des Rotorträgers 32 überlappt den Verbindungsflansch der Rotorwelle 33 nämlich axial außen. Der Verbindungsflansch ist deshalb zur Unterscheidung mit 33b bezeichnet. Aufgrund der Modifikation kann der Rotorträger 32 mitsamt Polring 31 nach dem Lösen der Verbindung mit dem Verbindungsflansch 33b, wobei die Verbindung beispielhaft wieder als Schraubverbindung gebildet ist, einfach axial vom Stator 25 nach außen abgezogen werden. Dies erleichtert Wartungs- und Reparaturarbeiten beispielsweise am Spulenteil 26 oder Polring 31. Der Stator 25 kann hierbei am Rahmen 1-8 verbleiben. Die Anordnung ermöglicht bei Bereitstellung unterschiedlicher Polringe 31 oder kompletter Polring- und Rotorträgereinheiten 31, 32 auch eine einfache und flexible Umrüstung des Motors 20. So kann der Polring 31 einzeln oder in einer Einheit aus Polring 31 und Rotorträger 32 in unterschiedlichen Varianten zur Verfügung gestellt werden, wobei die Varianten sich durch die Stärke der verwendeten Magnete unterscheiden können. Der Kunde kann die Leistung seines Motors 20 nachträglich einfach durch Austausch der ursprünglich schwächeren durch eine stärkere Variante steigern. Ebenso hat er gleich beim Kauf die Auswahl, wobei der Polring 31, vorzugsweise die herstellerseitig zur Verfügung gestellte Einheit aus Polring 31 und Rotorträger 32, beim Händler eingebaut oder entsprechend bestellt werden kann.

Modifiziert ist auch die Montage. Die Montageelement 28, die beim Motor 20 der Figur 7, einfach Durchgänge im Statorträger 27 sind, wurden durch vorzugsweise fest mit dem Statorträger verbundene Montageelemente 28a ersetzt, die vom Statorträger 27 nach innen in Richtung auf das Hinterrad vorragen und beispielhaft von Schrauben gebildet werden. Der Motor 20 wird bei der Montage an der Stützeinrichtung 41, 42 mittels der Montageelemente 28a positioniert, wobei die Montageelemente 28a entsprechende Durchgänge der Stützeinrichtung 41, 42 durchragen. Anschließend werden die Montageelemente 28a mittels zusammenwirkender weiterer Montageelemente 28b, beispielhaft Schrauben, gesichert und der Motor 20 wird dadurch an der Stützeinrichtung befestigt. Mit Ausnahme der erläuterten Unterschiede entspricht der modifizierte Motor 20 dem Motor 20 der Figur 7.

Das Motorritzel 21 ist auf einfache Weise austauschbar. Dies ist nicht nur für Wartungs- und Reparaturarbeiten von Vorteil, sondern erleichtert auch eine Anpassung des Grads der Motorunterstützung an die Bedürfnisse des Benutzers. Für die Anpassung können Motorritzel 21 in unterschiedlichen Größen bzw. Zähnezahlen vorgehalten und vor Ort, beim Händler oder Benutzer, eingebaut oder ausgetauscht werden. Für den einfachen Austausch ist die Motorwelle 35 lösbar montiert. Für die Lösbarkeit sorgt das äußere Sicherungselement 40, das auf der vom Hinterrad abgewandten Seite des Elektromotors 20, in den Figuren 7 und 8 jeweils links von der Stator-Rotor-Anordnung 25, 30 leicht zugänglich lösbar angeordnet ist. Das äußere Sicherungselement 40 kann insbesondere von einem Sprengring gebildet werden, der gegen seine eigene Federkraft aus seinem Sitz bewegt werden kann. Bevorzugt sind beide Sicherungselemente 40 lösbar, beispielsweise jeweils als Sprengring gebildet. Nach dem Lösen des äußeren Sicherungselements 40 kann die Motorwelle 35 gemeinsam mit dem verdrehgesichert mit der Welle 35 verbundenen Motorritzel 21 einfach zur Seite des Motorritzels 21 hin aus dem Motor 20, im Beispiel aus der Rotorwelle 33, gezogen werden. Der Motorfreilauf 34 verbleibt dabei im Motor 20 bzw. der Rotorwelle 33. Anschließend kann eine Motorwelle 35 mit einem anderen Motorritzel 21 stattdessen wieder eingeschoben und mittels des äußeren Sicherungselements 40 gesichert werden. In der gewählten Anordnung des Elektromotors 20 überlappend mit dem Hinterrad wird die Welle 35 durch die Speichen des Hinterrads abgezogen und die Welle mit dem neuen Ritzel 21 durch die Speichen des Hinterrads hindurch eingeschoben- Das Hinterrad kann zwar, muss hierfür aber nicht ausgebaut werden.

Für den einfachen Wechsel des Motorritzels 21 ist auch die Befestigung des Elektromotors 20 mittels der Langlöcher 43 (Figur 2) von Vorteil. Diese Befestigung erlaubt es, den Abstand zu verändern, den die Drehachse R₂₀ des Motors 20 von der Drehachse R_{B} des Hinterrads B aufweist, zu verstellen, indem die mittels der Langlöcher 43 und der damit zusammenwirkenden Montageelemente, beispielsweise die Montageelemente 28a und 28b, bewirkte Befestigung des Elektromotors 20 an den Stützen 41 und 42 gelockert, aber nicht aufgelöst wird. Im gelockerten, noch immer an den Stützen 41 und 42 gehaltenen, nun längs der Langlöcher 43 geführten Zustand kann der Elektromotor 20 und damit gemeinsam das Motorritzel 21 in Richtung der Längserstreckung der Langlöcher 43 verstellt werden, beispielsweise um die Spannung des Zugmittels 22 zu verstellen oder eine Anpassung an unterschiedlich große Motorritzel 21 vorzunehmen. Die Welle 35 kann mitsamt dem Ritzel 21 aus dem Motor 20 gezogen werden. Nach dem Einschieben der bisherigen oder vorzugsweise einer neuen Motorwelle 35 mit einem neuen Ritzel 21 wird diese Welle 35 mittels des äußeren Sicherungselements 40 gesichert und der Motor 20 im nach wie vor mit den Stützen 41 und 42 bestehenden, nur gelockerten Eingriff in den Langlöchern 43 verstellt, bis eine ausreichende Spannung des Zugmittels 22 hergestellt ist. Schließlich wird der Motor mittels der Montageelemente, beispielsweise mittels der Montageelemente 28a und 28b, im Halteeingriff mit den Stützen 41 und 42 wieder gesichert.

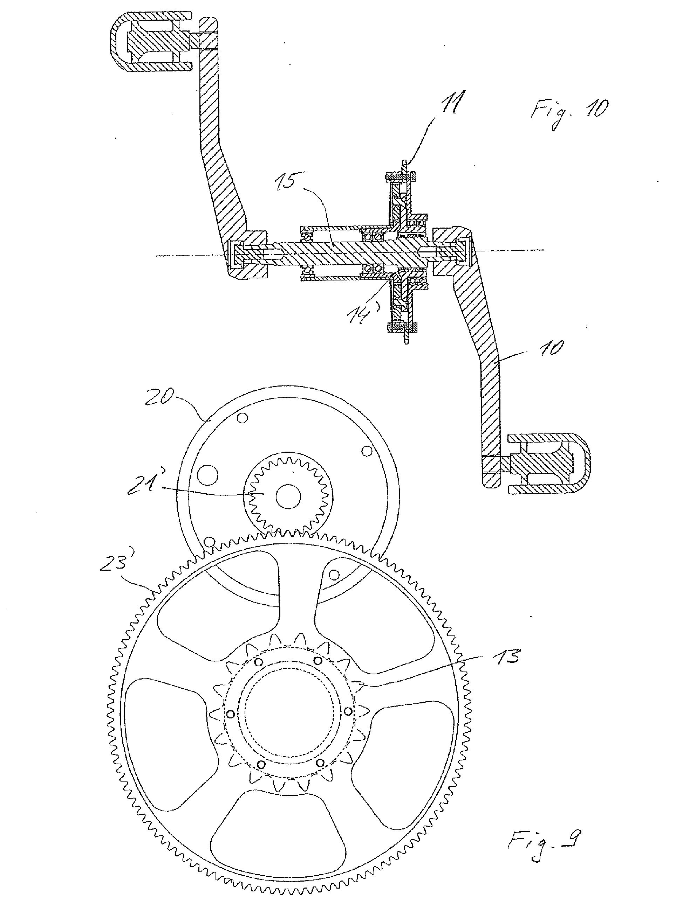

In Figur 9 ist eine zur Motorkopplung 21, 22 und 23 alternativ einsetzbare Motorkopplung gezeigt, die nicht als Zugmitteltrieb, sondern als Stirnradgetriebe gebildet ist. Das Stirnradgetriebe umfasst ein außenverzahntes Motorritzel 21' und ein damit im Zahneingriff befindliches Motor-Hinterradritzel 23', die miteinander bereits alleine die alternative Motorkopplung bilden. Beide Motorkopplungen, die bevorzugte Motorkopplung 21-23 einerseits und auch die Motorkopplung 21', 23' andererseits, sind einstufig. Die Drehzahl des Elektromotors 20 wird jeweils in nur einer einzigen Getriebestufe untersetzt und über das jeweilige Motor-Hinterradritzel 23 oder 23', das gleichzeitig das Getriebeausgangsritzel bildet, auf das Getriebeeingangsglied 19a (Figur 5) übertragen. Die Ausführung des Elektromotors 20 als Außenläufermotor ermöglicht eine derart einfache Motorkopplung mit Untersetzung in nur einer einzigen Getriebestufe.

Figur 10 zeigt einen alternativen Tretkurbelantrieb, bei dem im Bereich der Tretkurbel 10 ein Übersetzungsgetriebe, beispielhaft wie bevorzugt ein Planetengetriebe, integriert ist. Das Übersetzungsgetriebe kann bevorzugt schaltbar sein oder aber einfach mit stets der gleichen Übersetzung die Drehzahl der Tretkurbelwelle 15 auf das Tretkurbelritzel 11 übertragen. Das Übersetzungsgetriebe ist im Drehmomentfluss zwischen der Tretkurbelwelle 15 und dem Tretkurbelritzel 11 angeordnet und überträgt somit das Drehmoment der Tretkurbelwelle 15 auf das Tretkurbelritzel 11. Zwischen Tretkurbelwelle 15 und Kurbelritzel ist auf der Drehachse R₁₀ wieder ein Freilauf 14' angeordnet.

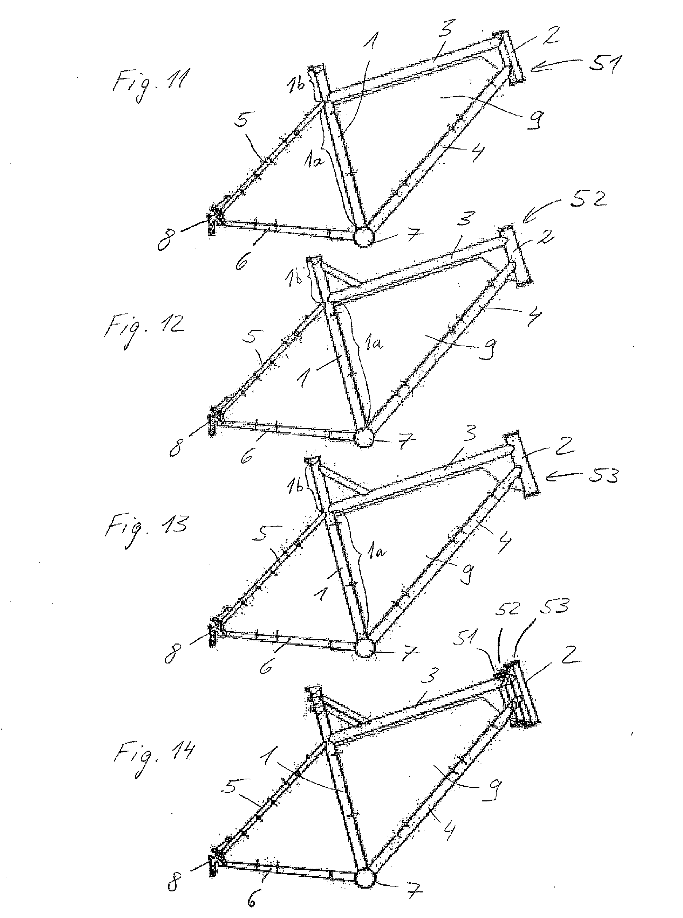

Die Figuren 11, 12 und 13 zeigen drei Rahmen 51, 52 und 53 eines Rahmensystems. Die Rahmen weichen nur in wenigen Merkmalen voneinander ab. Insbesondere sind die vom jeweiligen Sitzrohr 1, dem jeweiligen Steuerrohr 2 und den jeweiligen Streben 3 und 4 umrahmten, im Rahmen frei bleibenden Flächen der Vorderrahmen mit Ausnahme eines kleinen Bereichs unmittelbar beim Steuerrohr 2 kongruent, also deckungsgleich. Die Rahmen unterscheiden sich, was die umrahmten Flächen angeht, nur durch die Anordnung des jeweiligen Steuerrohrs 2 voneinander. Der Unterschied besteht darin, dass das Steuerrohr 2 parallel zu sich selbst verschoben ist, so dass das Steuerrohr 2 des oberen Rahmens 51 dem Sitzrohr 1 des gleichen Rahmens näher ist als das Steuerrohr 2 des mittleren Rahmens 52 und das Steuerrohr 2 des unteren Rahmens 53 dem Sitzrohr 1 des jeweils gleichen Rahmens. Auf diese Weise ergeben sich drei unterschiedliche Rahmengrößen, dem oberen Rahmen 51 als dem kleinsten, dem mittleren Rahmen 52 als dem Rahmen mittlerer Größe und dem unteren Rahmen 53 als dem größten Rahmen.

In der Darstellung der Figur 14 sind die Rahmen 51, 52 und 53 des Systems zur Deckung gebracht.

Bei den unterschiedlichen Rahmen des Systems sind die hinteren Rahmendreiecke untereinander gleich. Das Tretlagergehäuse 7 ist jeweils am gleichen Ort und in gleicher Weise angeordnet. Das Sitzrohr 1 weist über seinen Rahmenabschnitt 1a zwischen dem Tretlagergehäuse 7 und der Befestigung der Oberstrebe 3 sowie der oberen Hinterstrebe 5 jeweils die gleiche Länge auf. Des Weiteren sind auch die Winkel, unter denen die Streben 3 und 4 des Vorderrahmens auf das Sitzrohr 1 laufen, bei allen Rahmen 1 bis 8 die gleichen. Unterschiedlich sind wie gesagt die Positionen des Steuerrohrs 2, wobei die Winkel, unter denen die Streben 3 und 4 auf das Steuerrohr 2 laufen, jeweils die gleichen sind. Die Steuerrohre 2 sind in Fahrtrichtung X und in Höhenrichtung Z parallel zueinander versetzt.

Die Steuerrohre 2 sind optional unterschiedlich lang. Durch den Längenunterschied wird der Unterschied in Bezug auf die Höhenrichtung Z kompensiert, so dass gleiche oder nur gleichlange Vordergabeln und gleichgroße Vorderräder A verwendet werden können. Ferner sind die oberhalb des hinteren Rahmendreiecks und oberhalb des Vorderrahmens überstehenden Sitzrohrabschnitte 1b unterschiedlich lang, so dass der Sitz bzw. Sattel beim Rahmen 53 höher eingestellt werden kann als beim Rahmen 52 und dessen Sitz höher ausgefahren werden kann als der des Rahmens 51.

Mittels der unterschiedlichen Rahmen des Systems, beispielhaft drei unterschiedliche Rahmen, kann bei sonst unveränderten Komponenten das Radfahrzeug sehr einfach und preiswert auf unterschiedlich große Fahrer angepasst werden.

In den Figuren 11 bis 14 ist auch jeweils die Stromquelle, genauer gesagt das Gehäuse 9 der Stromquelle, dargestellt. Wegen der Kongruenz der Vorderrahmen, Kongruenz bis unmittelbar in den Nahbereich des Steuerrohrs 2, kann für alle unterschiedlichen Rahmen jeweils die gleiche Stromquelle bzw. das gleiche Stromquellengehäuse 9 verwendet werden, da die frei bleibende Fläche des Vorderrahmens vom jeweiligen Sitzrohr 1 ausgehend bis nahe zu dem jeweiligen Steuerrohr 2 und somit über den weit überwiegenden Teil dieser Rahmenfläche bei allen unterschiedlichen Rahmen nach Größe und Form die gleiche ist.

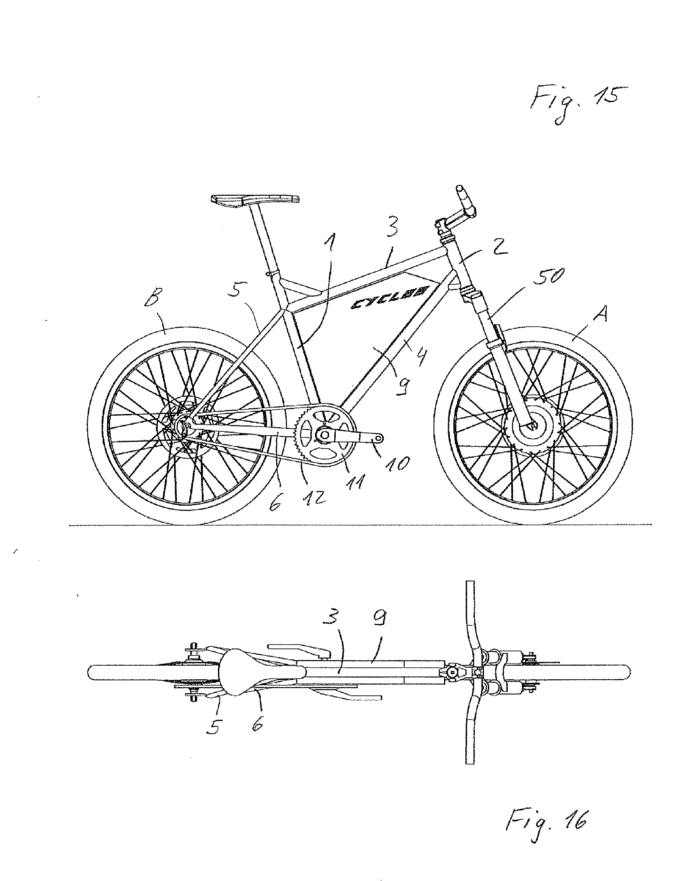

Figur 15 zeigt ein Fahrrad in einer Seitenansicht, das für einen nachträglichen Einbau des erfindungsgemäßen Elektroantriebs vorgesehen ist. Der Elektromotor 20 muss noch montiert werden, das Stromquellengehäuse 9 ist bereits montiert. Vom Strozncluellengehäuse 9 und dem Rahmen 1-8 abgesehen handelt es sich um ein herkömmliches Fahrrad in der Art eines Mountainbike. Bei dem Rahmen 1-8 handelt es sich um einen der Rahmen 51 bis 53 des anhand der Figuren 11 bis 14 erläuterten Rahmensystems, zu dem auch der Rahmen des Fahrrads der Figuren 1 bis 3 gehört. Die Vordergabel 50 ist eine Federgabel, im Unterschied zur Starrgabel des Fahrrads der Figur 1. Die beiden Rahmen, der des Fahrrads der Figur 1 und der des Fahrrads der Figur 15, können gleich, beispielsweise jeweils ein Rahmen 51 sein.

Figur 16 zeigt das Fahrrad der Figur 15 in einer Draufsicht von oben. Die Draufsicht zeigt, wie schlank das Stromquellengehäuse 9 aufgrund seiner großen Seitenfläche sein kann. Im Beispiel hat es eine axial gemessene Breite über Alles, die kleiner als das Dreifache der Dicke der Oberstrebe 3 ist.

### Bezugszeichen:

- 1: Sitzrohr
- 1a: Sitzrohrabschnitt
- 1b: Sitzrohrabschnitt
- 2: Steuerrohr
- 3: Oberstrebe
- 4: Unterstrebe
- 5: obere Hinterradstrebe
- 6: untere Hinterradstrebe
- 7: Tretlagergehäuse
- 8: Aufhängungsstruktur
- 9: Stromquelle
- 10: Tretkurbel
- 11: Tretkurbelritzel
- 12: Zugmittel
- 13: Tretkuxbel-Hinterradritzel
- 14: Tretkurbelfreilauf
- 15: Tretkurbelwelle
- 16: Hinterradachse
- 17: Sicherungselement
- 18: Nabe
- 19: Getriebe
- 20: Elektromotor
- 21: Motorritzel
- 22: Zugmittel
- 23: Motor-Hinterradritzel
- 24: Nase
- 25: Stator
- 26: Spulenteil, Wicklung
- 27: Statorträger, Statordeckel
- 28: Montageelement
- 28a: Montageelement
- 28b: Montageelement
- 29: Statordichtsteg
- 30: Rotor
- 31: Polring
- 32: Rotorträger
- 32a: Umfangswand, Rückschlussring
- 32b: Boden, Verbindungsabschnitt
- 33: Rotorwelle
- 33a: Verbindungsflansch
- 33b: Verbindungsflansch
- 34: Motorfreilauf
- 35: Motorwelle
- 36: Lager
- 37: Anlaufscheibe
- 38: Dichtung
- 39: Rotordichtsteg
- 40: Sicherungselement
- 41: Stütze
- 42: Stütze
- 43: Langloch
- 44-49: -
- 50: Vordergabel
- 51: erster Rahmen
- 52: zweiter Rahmen
- 51: dritter Rahmen
- A: Vorderrad
- B: Hinterrad
- D: Display
- D₂₀: Motordicke
- R_{B}: Drehachse des Hinterrads
- R₂₀: Drehachse des Elektromotors
- R₁₀: Drehachse der Tretkurbel
- X: Fahrtrichtung
- Y: Querrichtung, Axialrichtung
- Z: Höhenrichtung

## Patentansprüche

1. Radfahrzeug mit Tretkurbel- und Elektroantrieb, umfassend:
a) einen der Aufhängung eines Vorderrads (A) und eines Hinterrads (B) dienenden Rahmen (1-8) mit einem Sitzrohr (1), einer oberen Hinterradstrebe (5) und einer unteren Hinterradstrebe (6), die zur Aufhängung des Hinterrads (B) miteinander zumindest im Wesentlichen ein Rahmendreieck (1, 5, 6) bilden,
b) eine Tretkurbel (10) zur Umwandlung von Muskelkraft in Drehmoment,
c) eine Tretkurbelkopplung (11-13) zur Übertragung des Drehmoments der Tretkurbel (10) auf das Hinterrad (B),
d) einen Elektromotor (20), vorzugsweise Außenläufermotor, mit einem Stator (25) und einem Rotor (30),
e) und eine Motorkopplung (21-23) zur Übertragung eines Drehmoments des Elektromotors (20) auf das Hinterrad (B),
f) wobei die Tretkurbel (10) und der Elektromotor (20) auf die gleiche Seite des Hinterrads (B) abtreiben,
g) der Elektromotor (20) am Rahmendreieck (1, 5, 6) abgestützt
h) und in einer Seitenansicht auf das Radfahrzeug gesehen innerhalb des Rahmendreiecks (1, 5, 6) angeordnet ist.

2. Radfahrzeug nach dem vorhergehenden Anspruch, **dadurch gekennzeichnet, dass** eine Drehachse (R₂₀) des Elektromotors (20) in der Seitenansicht gesehen der Drehachse (R_{B}) des Hinterrads (B) näher ist als dem Sitzrohr (1) oder der Elektromotor (20) in der Seitenansicht gesehen mit der Tretkurbelkopplung (11-13), vorzugsweise einem Zugmittel (12) der Tretkurbelkopplung (11-13), überlappt.

3. Radfahrzeug nach einem der vorhergehenden Ansprüche, **dadurch gekennzeichnet, dass** der Rotor (30) einen Rotortopf (31, 32, 33) mit einem Boden (32b) und einer Umfangswand (32a) bildet, der Rotortopf (31, 32, 33) den Stator (25) mit seinem Boden (32b) an einer Stirnseite und mit seiner Umfangswand (32a) außen umlaufend umgibt und der Rotortopf (31, 32, 33) ein äußeres, im Betrieb des Elektromotors (20) drehendes Gehäuse des Elektromotors (20) und der Stator (25) einen Statordeckel (27) für den Rotortopf (31, 32, 33) bildet, wobei ein im Betrieb des Elektromotors (20) mit dem Stator (25) elektromagnetisch zusammenwirkender Teil (31, 32) des Rotors (30) vorzugsweise an der Umfangswand (32a) des Rotortopfs (31, 32, 33) angeordnet ist oder diese bildet.

4. Radfahrzeug nach dem vorhergehenden Anspruch und wenigstens einem der folgenden Merkmale:
(i) der Elektromotor (20) ist im Bereich des Statordeckels (27) am Radfahrzeug befestigt;
(ii) der Stator (25) bildet den Statordeckel (27) an einer dem Hinterrad (B) zugewandten Innenseite des Elektromotors (20).

5. Radfahrzeug nach einem der zwei vorhergehenden Ansprüche, **dadurch gekennzeichnet, dass** der Stator (25) und der Rotor (30) miteinander um die Drehachse (R₂₀) des Rotors (30) umlaufend eine Wellendichtung (29, 39), vorzugsweise in der Art einer Labyrinthdichtung bilden.

6. Radfahrzeug nach dem vorhergehenden Anspruch, **dadurch gekennzeichnet, dass** der Stator (25) am Statordeckel (27) einen Statordichtsteg (29) und der Rotor (30) an der Umfangswand (32a) des Rotortopfs (31, 32, 33) einen Rotordichtsteg (39) aufweist und vorzugsweise wenigstens eines aus Statordichtsteg (29) und Rotordichtsteg (39) umlaufend wenigstens eine Dichtnut (29) und das andere umlaufend einen in die Dichtnut (29) eintauchenden Dichtring (39) bildet, wobei der Dichtring vorzugsweise axial in die Dichtnut eintaucht.

7. Elektromotor nach einem der vorhergehenden Ansprüche, **dadurch gekennzeichnet, dass** der Stator (25) einen Statorträger (27) mit einem zentralen, hülsenformigen Trägerbereich und einem vom zentralen Trägerbereich nach radial außen abragenden Flanschbereich aufweist und der Stator (25) mit dem Flanschbereich einen Statordeckel (27) für den Rotortopf (31, 32, 33) bildet, wobei der Rotortopf (31, 32, 33) vorzugsweise eine Rotorwelle (33) umfasst, die sich vom Boden (32b) des Rotortopfs (31, 32, 33) in den zentralen Trägerbereich erstreckt und dort am Statorträger (27) drehbar abgestützt ist.

8. Radfahrzeug nach einem der vorhergehenden Ansprüche, **dadurch gekennzeichnet, dass** der Elektromotor (20) mittels einer oberen Stütze (41) an der oberen Hinterradstrebe (5) und mittels einer von der oberen Stütze (41) vorzugsweise separaten unteren Stütze (42) an der unteren Hinterradstrebe (6) abgestützt ist, wobei sich ein Zugmittel der vorzugsweise als Zugmitteltrieb gebildeten Tretkurbelkopplung (1-14) in der Seitenansicht gesehen in einem zwischen den Stützen (41, 42) vorzugsweise verbleibenden Freiraum erstreckt.

9. Radfahrzeug nach einem dem vorhergehenden Anspruch, **dadurch gekennzeichnet, dass** der Stator (25) und der Rotor (30) des Elektromotors (20) vom Hinterrad (B) aus gesehen axial weiter außen als die Stützen (41, 42) angeordnet sind und sich eine Motorwelle (35) des Elektromotors (20) durch oder zwischen den Stützen (41, 42) hindurch in Richtung auf das Hinterrad (B) erstreckt.

10. Radfahrzeug nach einem der vorhergehenden Ansprüche, **dadurch gekennzeichnet, dass** die Motorkopplung (21-23) axial zwischen dem Hinterrad (B) und der Tretkurbelkopplung (11-13) verläuft, der Stator (25) und der Rotor (30) vom Hinterrad (B) aus gesehen axial weiter außen als die Tretkurbelkopplung (11-13) angeordnet sind und eine Motorwelle (36) des Elektromotors (20) von außen in Richtung auf das Hinterrad (B) über die Tretkurbelkopplung (11- 13) hinaus ragt.

11. Radfahrzeug nach einem der vorhergehenden Ansprüche, **dadurch gekennzeichnet, dass** am Hinterrad (B), vorzugsweise in einer Nabe (18) des Hinterrads (B), ein variables, vorzugsweise schaltbares Getriebe (19), vorzugsweise ein Planetengetriebe, mit einer Getriebeeingangswelle (19a) angeordnet ist und sowohl die Tretkurbel (10) als auch der Elektromotor (20) auf das Getriebe (19), vorzugsweise auf die Getriebeeingangswelle (19a) abtreiben.

12. Radfahrzeug nach einem der vorhergehenden Ansprüche, **dadurch gekennzeichnet, dass** die Tretkurbelkopplung (11-13) ein um die Drehachse (R_{B}) des Hinterrads (B) drehbares, mittels der Tretkurbel (10) antreibbares Tretkurbel-Hinterradritzel (13) und zusätzlich die Motorkopplung (21-23) ein um die Drehachse (R_{B}) drehbares, vom Elektromotor (20) antreibbares Motor-Hinterradritzel (23) aufweist, wobei die Hinterradritzel (13, 23) in bevorzugter Ausführung auf der gleichen Seite des Hinterrads (B) axial nebeneinander angeordnet sind und in Bezug auf eine Antriebsdrehrichtung und die Gegendrehrichtung vorzugsweise eine Dreheinheit bilden.

13. Radfahrzeug nach einem der vorhergehenden Ansprüche, **dadurch gekennzeichnet, dass** die Motorkopplung (21-23) ein vom Rotor (30) in eine Antriebsdrehrichtung drehantreibbares Motorausgangsritzel (21), ein um die Drehachse (R_{B}) des Hinterrads (B) drehbares Motor-Hinterradritzel (23) und einen die Ritzel (21, 23) umschlingenden Zahnriemen (22), vorzugsweise einen faserverstärkten Kunststoffzahnriemen, umfasst.

14. Radfahrzeug nach einem der vorhergehenden Ansprüche, **dadurch gekennzeichnet, dass** der Elektromotor (20) eine Rotorwelle (35) und die Motorkopplung (21-23) ein auf oder an der Motorwelle (35) drehmomentfest angeordnetes Motorausgangsritzel (21) umfasst, die Motorwelle (35) in einen zentralen Hohlraum des Rotors (30) ragt oder diesen Hohlraum durchragt und relativ zum Rotor (30) mittels einer lösbaren Axialsicherung (40) axial gesichert ist und die Axialsicherung (40) außerhalb des Hohlraums, vorzugsweise außerhalb eines Gehäuses (27, 31, 32, 33) des Elektromotors (20), angeordnet ist.

15. Radfahrzeug nach einem der vorhergehenden Ansprüche, **dadurch gekennzeichnet, dass** das Drehmoment des Elektromotors (20) über einen von der Drehachse (R_{B}) des Hinterrads (B) abgerückten Motorfreilauf (34) oder das Drehmoment der Tretkurbel (10) über einen von der Drehachse (R_{B}) des Hinterrads (B) abgerückten Tretkurbelfreilauf (14) auf die Drehachse (R_{B}) des Hinterrads (B) übertragbar ist oder sind.

16. Radfahrzeug nach einem der vorhergehenden Ansprüche, **dadurch gekennzeichnet, dass** der Elektromotor (20) mittels einer Stützeinrichtung (41, 42) am Rahmendreieck (1, 5, 6) abgestützt und mit der Stützeinrichtung (41, 42) in einem Eingriff (28, 43; 28a, 28b, 43) ist, der gelockert werden kann, so dass der Elektromotor (20) im gelockerten, aber weiterhin bestehenden Eingriff relativ zu der Stützeinrichtung (41, 42) beweglich und in zumindest einer von mehreren unterschiedlichen Positionen blockierbar ist, vorzugsweise kraftschlüssig.
